# EUROPEAN PATENT APPLICATION

(11) **EP 4 412 152 A1**
(43) Date of publication of application: **07.08.2024**
(21) Application number: 22885632.4
(22) Date of filing: 10.10.2022
(51) Int. Cl.: H04L 9/40, G06F 21/30

(54) **AUTHENTICATION METHOD AND COMMUNICATION APPARATUS**

(30) Priority: 29.10.2021 CN 202111273493
(71) Applicant: Huawei Technologies Co., Ltd., Shenzhen, Guangdong 518129 (CN)
(72) Inventor: DENG, Shuiguang, Hangzhou, Zhejiang 310027 (CN); CHENG, Guanjie, Hangzhou, Zhejiang 310027 (CN); WEN, Yingying, Hangzhou, Zhejiang 310027 (CN); YAN, Xueqiang, Shenzhen, Guangdong 518129 (CN); ZHAO, Mingyu, Shenzhen, Guangdong 518129 (CN); WANG, Yang, Shenzhen, Guangdong 518129 (CN); WU, Jianjun, Shenzhen, Guangdong 518129 (CN)
(74) Representative: Gill Jennings & Every LLP
(86) International application number: PCT/CN2022/124242
(87) International publication number: WO 2023/071751

(57) **Abstract**

This application provides an authentication method and a communication apparatus. An internet of things gateway generates and configures an authentication tag for an internet of things user and a terminal device. When publishing a collaboration task, the internet of things user sends an encrypted authentication tag of the internet of things user to the terminal device. After receiving information about the internet of things user, the terminal device sends the encrypted authentication tag of the internet of things user and an encrypted authentication tag of the terminal device to the internet of things gateway. The internet of things gateway performs authentication on the internet of things user and the terminal device based on the received information, provides the terminal device with information for performing authentication on the internet of things user, and provides the internet of things user with information for performing authentication on the terminal device, so that the terminal device can perform authentication on the internet of things user, and the internet of things user can perform authentication on the terminal device. In this way, bidirectional authentication between the internet of things user and the terminal device can be implemented.

## Description

This application claims priority to Chinese Patent Application No. 202111273493.2, filed with the China National Intellectual Property Administration on October 29, 2021 and entitled "AUTHENTICATION METHOD AND COMMUNICATION APPARATUS", which is incorporated herein by reference in its entirety.

### TECHNICAL FIELD

Embodiments of this application relate to the communication field, and more specifically, to an authentication method and a communication apparatus.

### BACKGROUND

Booming development of current wireless sensor network technologies and terminal smart device manufacturing technologies brings infinite application prospects for internet of things technologies. Currently, an internet of things user initiates a collaboration task to an internet of things terminal device to perform internet of things data collection, data sharing, and data analysis, so as to provide an intelligent service for an application layer. This has become a brand new service providing mode.

However, many serious security risks are hidden in such an architecture in which the internet of things user collaborates with the internet of things terminal device. First, the internet of things user participating in collaboration may perform malicious behavior for personal interests. For example, the internet of things user may send a virus command to both a smart household and a vehicle-mounted smart device, to steal privacy data of users in daily life from a multidimensional perspective. Second, usually, the internet of things terminal device does not have a capability of determining a collaboration task. As a result, the internet of things terminal device may assist in executing an invalid internet of things task, causing incalculable damage to an internet of things system. In addition, most internet of things terminal devices are unattended and vulnerable to various malicious attacks, and therefore attackers can easily access and destroy devices, or even tamper with generated data.

Therefore, how to implement bidirectional authentication between the internet of things user and the internet of things terminal device to ensure validity of an internet of things collaboration task and reliability of a collaboration process becomes an urgent problem that needs to be resolved.

### SUMMARY

Embodiments of this application provide an authentication method and a communication apparatus, to implement bidirectional authentication between an internet of things user and an internet of things terminal device, thereby ensuring validity of an internet of things collaboration task and reliability of a collaboration process.

According to a first aspect, this application provides an authentication method. The method includes: An internet of things gateway receives a first message from a terminal device, where the first message includes first information and second information, the first information is used to perform authentication on an internet of things user that requests to log in to the terminal device, and the second information is used to perform authentication on the terminal device. The internet of things gateway performs authentication on the internet of things user based on the first information. The internet of things gateway performs authentication on the terminal device based on the second information. The internet of things gateway sends a second message to the terminal device when authentication on the internet of things user and the terminal device succeeds, where the second message includes third authentication information and fourth authentication information, the third authentication information is used by the terminal device to perform authentication on the internet of things user, and the fourth authentication information is used by the internet of things user to perform authentication on the terminal device.

In the foregoing technical solution, the internet of things gateway may perform authentication on the internet of things user and the terminal device based on information from the terminal device, and feed back, to the terminal device when authentication on the internet of things user and the terminal device succeeds, information used by the terminal device to perform authentication on the internet of things user and information used by the internet of things user to perform authentication on the terminal device, so that the terminal device can perform authentication on the internet of things user, and the internet of things user can perform authentication on the terminal device. In this way, this technical solution can implement bidirectional authentication between the internet of things user and the terminal device, to ensure validity of an internet of things collaboration task and reliability of a collaboration process.

In addition, in this technical solution, credit endorsement of a third-party service organization is replaced with credit of the internet of things gateway, to help reduce risks of privacy leakage and a single-point attack.

With reference to the first aspect, in some implementations, the first information includes a first identity of the internet of things user and first authentication information, the first authentication information indicates a first authentication tag on which first encryption processing is performed, and the first authentication tag is an authentication tag of the internet of things user; and that the internet of things gateway performs authentication on the internet of things user based on the first information includes: The internet of things gateway obtains, based on the first identity, a third authentication tag corresponding to the first identity, and performs the first encryption processing on the third authentication tag to obtain fifth authentication information; and when the fifth authentication information is the same as the first authentication information, the internet of things gateway determines that authentication on the internet of things user succeeds; and/or the second information includes a second identity of the terminal device and second authentication information, the second authentication information indicates a second authentication tag on which second encryption processing is performed, and the second authentication tag is an authentication tag of the terminal device; and that the internet of things gateway performs authentication on the terminal device based on the second information includes: The internet of things gateway obtains, based on the second identity, a fourth authentication tag corresponding to the second identity, and performs the second encryption processing on the fourth authentication tag to obtain sixth authentication information; and when the sixth authentication information is the same as the second authentication information, the internet of things gateway determines that authentication on the terminal device succeeds.

In the foregoing technical solution, the internet of things gateway may obtain, based on the first identity of the internet of things user, the locally stored third authentication tag corresponding to the first identity, perform same encryption processing on the third authentication tag as the first authentication identifier, and implement authentication on the internet of things user by determining whether obtained information is the same as the first authentication information. Similarly, the internet of things gateway may obtain, based on the second identity of the terminal device, the locally stored fourth authentication tag corresponding to the second identity, perform same encryption processing on the fourth authentication tag as the second authentication identifier, and implement authentication on the terminal device by determining whether obtained information is the same as the second authentication information. Compared with a cryptographic algorithm-based authentication scheme, this solution can simplify authentication logic and reduce key management overheads.

With reference to any one of the first aspect or the implementations, in some other implementations, the third authentication information indicates the third authentication tag on which third encryption processing is performed; and/or the fourth authentication information indicates the fourth authentication tag on which fourth encryption processing is performed.

In the foregoing technical solution, the internet of things gateway feeds back the encrypted third authentication tag and the encrypted fourth authentication tag, so that the terminal device or the internet of things user can implement authentication on the internet of things user or the terminal device based on the authentication tag. Compared with a cryptographic algorithm-based public and private key authentication scheme, this solution can simplify authentication logic and reduce key management overheads.

With reference to any one of the first aspect or the implementations, in some other implementations, at least one of the first encryption processing, the second encryption processing, the third encryption processing, and the fourth encryption processing is based on a hash algorithm and/or an exclusive OR algorithm.

In this technical solution, each piece of encryption processing is based on the hash algorithm and/or the exclusive OR algorithm, so that authentication logic can be simplified, and computing overheads and communication overheads in an authentication process can be reduced. This helps improve efficiency of authentication between the terminal device and the internet of things user, and can meet a requirement of an application layer for a low latency of an internet of things service.

With reference to any one of the first aspect or the implementations, in some other implementations, the first authentication information satisfies: Eᵢ=h(βᵢ∥IDᵢ∥DIDⱼ), βᵢ=h(Tagᵢ∥T₁), Tagi=Wi ⊕ αᵢ, and Wᵢ=h(rᵢ∥PWᵢ); and/or the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or the third authentication information satisfies: Fᵢⱼ=βᵢ'⊗h(Tagⱼ∥T₃) and βᵢ'=h(Tagᵢ'∥T₁); and/or the fourth authentication information satisfies: γᵢ=h(Tagᵢ'∥DIDⱼ); and/or the fifth authentication information satisfies: Eᵢ'=h(βᵢ'∥IDᵢ∥DIDⱼ) and βᵢ'=h(Tagᵢ'∥T₁); and/or the sixth authentication information satisfies: Iⱼ'=h(Tagⱼ'∥Eᵢ'), Eᵢ'=h(βᵢ'∥IDᵢ∥DIDⱼ), and βᵢ'=h(Tagᵢ'∥T₁). i identifies the internet of things user, j identifies the terminal device, Eᵢ is the first authentication information, Iⱼ is the second authentication information, Fᵢⱼ is the third authentication information, γᵢ is the fourth authentication information, Eᵢ' is the fifth authentication information, Iⱼ' is the sixth authentication information, h() represents a one-way hash function, ⊕ represents exclusive OR, ∥ represents concatenation or splicing, Wᵢ, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, T₁ is a moment at which Tagᵢ is obtained, and T₃ is a moment at which the internet of things gateway completes authentication on the internet of things user and the terminal device.

It should be noted that, if the internet of things user communicates with the terminal device or the internet of things gateway via a first apparatus (for example, a smartcard) or a second apparatus (for example, an auxiliary device), it may be understood that i may further identify the first apparatus or the second apparatus.

With reference to any one of the first aspect or the implementations, in some other implementations, the first message further includes a first timestamp and/or a second timestamp, the first timestamp indicates Ti, and the second timestamp indicates a moment at which the first message is sent; and the method further includes: The internet of things gateway obtains a current timestamp; and the terminal device determines that a difference between the first timestamp and the current timestamp does not exceed a first preset threshold, and/or the internet of things gateway determines that a difference between the second timestamp and the current timestamp does not exceed a second preset threshold; and/or the second message further includes a third timestamp, and the third timestamp indicates T₃. The timestamp is carried to defend against a replay attack.

With reference to any one of the first aspect or the implementations, in some other implementations, the method further includes: The internet of things gateway receives a first registration request message sent by a second apparatus, where the first registration request message is used to request to register the internet of things user with the internet of things gateway, the first registration request message includes the first identity of the internet of things user and registration information, and the registration information includes the password that is of the internet of things user and that is encrypted by the second apparatus; the internet of things gateway determines the first authentication tag based on the first registration request message, and generates a smartcard based on the first authentication tag, where the smartcard includes the first authentication tag encrypted by the internet of things gateway; and the internet of things gateway sends the smartcard to the second apparatus.

In the foregoing technical solution, the internet of things user may be registered with the internet of things gateway, and the internet of things gateway determines an authentication tag for the internet of things user and feeds back the authentication tag to the internet of things user, so that the terminal device and the internet of things gateway can subsequently perform authentication on the internet of things user based on the authentication tag.

With reference to any one of the first aspect or the implementations, in some other implementations, the password that is of the internet of things user and that is encrypted by the second apparatus satisfies: Wᵢ=h(rᵢ∥PWᵢ); and/or the first authentication tag satisfies: Tagᵢ=h(IDᵢ∥K_{GTW}), and the first authentication tag encrypted by the internet of things gateway satisfies: αᵢ=Wᵢ⊕Tagᵢ. i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, II represents concatenation or splicing, and rᵢ is a random number and is carried in the first registration request message and the smartcard.

It should be noted that, if the internet of things user communicates with the terminal device or the internet of things gateway via a first apparatus (for example, a smartcard) or a second apparatus (for example, an auxiliary device), it may be understood that i may further identify the first apparatus or the second apparatus.

With reference to any one of the first aspect or the implementations, in some other implementations, the first registration request message further includes a fifth timestamp, and the fifth timestamp indicates a moment at which the first registration request message is sent; and the method further includes: The internet of things gateway obtains a current timestamp; and the internet of things gateway determines that a difference between the fifth timestamp and the current timestamp does not exceed a sixth preset threshold. The timestamp is carried to defend against a replay attack.

With reference to any one of the first aspect or the implementations, in some other implementations, the method further includes: The internet of things gateway verifies the first identity.

According to a second aspect, this application provides an authentication method. The method includes: A terminal device receives a third message from a first apparatus, where the third message is used to request to log in to the terminal device, the third message includes first information, and the first information is used to perform authentication on an internet of things user that requests to log in to the terminal device; the terminal device sends a first message to an internet of things gateway based on the third message, where the first message includes the first information and second information, and the second information is used to perform authentication on the terminal device; the terminal device receives a second message from the internet of things gateway, where the second message includes third authentication information and fourth authentication information, the third authentication information is used by the terminal device to perform authentication on the internet of things user, and the fourth authentication information is used by the internet of things user to perform authentication on the terminal device; the terminal device performs authentication on the internet of things user based on the third authentication information; and the terminal device sends a fourth message to the first apparatus when authentication on the internet of things user succeeds, where the fourth message includes the fourth authentication information.

In the foregoing technical solution, after receiving a login request of the internet of things user, the terminal device may send, to the internet of things gateway, information used to perform authentication on the internet of things user and information used to perform authentication on the terminal device, so that the internet of things gateway can perform authentication on the internet of things user and the terminal device based on the information from the terminal device, and can perform authentication on the internet of things user based on information fed back by the internet of things gateway; and send, to the internet of things user, information that is sent by the internet of things gateway and that is used by the internet of things user to perform authentication on the terminal device, so that the internet of things user performs authentication on the terminal device. In this way, this technical solution can implement bidirectional authentication between the internet of things user and the terminal device, to ensure validity of an internet of things collaboration task and reliability of a collaboration process.

In addition, in this technical solution, credit endorsement of a third-party service organization is replaced with credit of the internet of things gateway, to help reduce risks of privacy leakage and a single-point attack.

With reference to the second aspect, in some implementations, the first information includes a first identity of the internet of things user and first authentication information, the first authentication information indicates a first authentication tag on which first encryption processing is performed, and the first authentication tag is an authentication tag of the internet of things user; and/or the second information includes a second identity of the terminal device and second authentication information, the second authentication information indicates a second authentication tag on which second encryption processing is performed, and the second authentication tag is an authentication tag of the terminal device; and/or the third authentication information indicates a third authentication tag on which third encryption processing is performed, and that the terminal device performs authentication on the internet of things user based on the third authentication information includes: The terminal device determines seventh authentication information based on the third authentication information, where the seventh authentication information indicates the third authentication tag on which first encryption processing is performed; and when the seventh authentication information is the same as the first authentication information, the terminal device determines that authentication on the internet of things user succeeds; and/or the fourth authentication information indicates a fourth authentication tag on which fourth encryption processing is performed.

In the foregoing technical solution, authentication on the internet of things user or the terminal device can be implemented based on the authentication tag. Compared with a cryptographic algorithm-based public and private key authentication scheme, this solution can simplify authentication logic and reduce key management overheads.

With reference to any one of the second aspect or the implementations, in some other implementations, the third message further includes third information, the third information indicates a first key on which fifth encryption processing is performed, and the first key is used to determine a second key used when the internet of things user communicates with the terminal device; the fourth message further includes fourth information, the fourth information indicates a third key on which sixth encryption processing is performed, and the third key is generated by the terminal device and is used to determine the second key; and the method further includes: The terminal device determines the second key based on the third information and the third key.

In this way, in this technical solution, the internet of things user and the terminal device can simply and quickly obtain a secure session key through negotiation to encrypt interaction information, so as to effectively ensure privacy and security of original internet of things data in a transmission process, and help avoid common security attacks such as eavesdropping and tampering.

With reference to any one of the second aspect or the implementations, in some other implementations, at least one of the first encryption processing, the second encryption processing, the third encryption processing, the fourth encryption processing, the fifth encryption processing, and the sixth encryption processing is based on a hash algorithm and/or an exclusive OR algorithm.

In this technical solution, each piece of encryption processing is based on the hash algorithm and/or the exclusive OR algorithm, so that authentication logic can be simplified, and computing overheads and communication overheads in an authentication process can be reduced. This helps improve efficiency of authentication between the terminal device and the internet of things user, and can meet a requirement of an application layer for a low latency of an internet of things service.

With reference to any one of the second aspect or the implementations, in some other implementations, the first authentication information satisfies: Eᵢ=h(βᵢ∥IDᵢ∥DIDⱼ), βᵢ=h(Tagᵢ∥T₁), Tagi=Wi ⊕ αᵢ, and Wᵢ=h(rᵢ∥PWᵢ); and/or the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or the third authentication information satisfies: Fᵢⱼ=βᵢ'⊕h(Tagⱼ'∥T₃) and βᵢ'=h(Tagᵢ'∥T₁); and/or the fourth authentication information satisfies: γᵢ=h(Tagᵢ'∥DIDⱼ); and/or the seventh authentication information satisfies: Eᵢ"=h(βᵢ'∥IDᵢ∥DIDⱼ) and βᵢ'=Fᵢⱼ⊕h(Tagⱼ∥T₃); and/or the third information satisfies: θᵢ=Kᵢ⊕βᵢ, βᵢ=h(Tagᵢ∥T₁), Tagᵢ=W_{i⊕}αᵢ, and Wᵢ=h(rᵢ∥PWᵢ); and/or the fourth information satisfies: Xᵢⱼ=h(Kᵢ'∥T₄)⊕Kⱼ, Kᵢ'=θᵢ⊕βᵢ', and βᵢ'=Fᵢⱼ⊕h(Tagⱼ∥T₃); and/or the second key satisfies: SKᵢⱼ=h(Kᵢ'⊕Kⱼ), Kᵢ'=θᵢ⊕βᵢ', and βᵢ'=Fᵢⱼ⊕h(Tagⱼ∥T₃). i identifies the internet of things user, j identifies the terminal device, Eᵢ is the first authentication information, Iⱼ is the second authentication information, Fᵢⱼ is the third authentication information, γᵢ is the fourth authentication information, Eᵢ" is the seventh authentication information, θᵢ is the third information, Xᵢⱼ is the fourth information, SKᵢⱼ is the second key, h() represents a one-way hash function, ⊕ represents exclusive OR, II represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, Kᵢ is the first key, Kⱼ is the third key, Kᵢ' is the first key restored by the terminal device, T₁ is a moment at which Tagᵢ is obtained, T₃ is a moment at which the internet of things gateway completes authentication on the internet of things user and the terminal device, and T₄ is a moment at which the terminal device obtains Kᵢ'.

It should be noted that, if the internet of things user communicates with the terminal device or the internet of things gateway via a first apparatus (for example, a smartcard) or a second apparatus (for example, an auxiliary device), it may be understood that i may further identify the first apparatus or the second apparatus. With reference to any one of the second aspect or the implementations, in some other implementations, the first message further includes a first timestamp and/or a second timestamp, the first timestamp indicates T₁, and the second timestamp indicates a moment at which the first message is sent; and/or the second message further includes a third timestamp, and the third timestamp indicates T₃; and the method further includes: The terminal device obtains a current timestamp; and the terminal device determines that a difference between the third timestamp and the current timestamp does not exceed a third preset threshold; and/or the third message further includes a first timestamp, and the first timestamp indicates T₁; and the method further includes: The terminal device obtains a current timestamp; and the terminal device determines that a difference between the first timestamp and the current timestamp does not exceed a fourth preset threshold; and/or the fourth message further includes a fourth timestamp, and the first timestamp indicates T₄. The timestamp is carried to defend against a replay attack.

With reference to any one of the second aspect or the implementations, in some other implementations, the third message is a login request message.

According to a third aspect, this application provides an authentication method. The method includes: A first apparatus sends a third message to a terminal device, where the third message is used to request to log in to the terminal device, the third message includes first information, and the first information is used to perform authentication on an internet of things user that requests to log in to the terminal device; the first apparatus receives a fourth message from the terminal device, where the fourth message includes fourth authentication information, the fourth authentication information is used by the internet of things user to perform authentication on the terminal device, and the fourth authentication information is determined by an internet of things gateway; and the first apparatus performs authentication on the terminal device based on the fourth message.

In the foregoing technical solution, when the internet of things user needs to publish a collaboration task, the first apparatus may send, to the terminal device, the information used to perform authentication on the internet of things user, so that the terminal device sends, to the internet of things gateway, both the information used to perform authentication on the internet of things user and the information used to perform authentication on the terminal device, and the internet of things gateway feeds back the information used by the internet of things user to perform authentication on the terminal device and sends the information to the internet of things user via the terminal device, to implement authentication on the terminal device. In this way, this technical solution can implement bidirectional authentication between the internet of things user and the terminal device, to ensure validity of an internet of things collaboration task and reliability of a collaboration process.

In addition, in this technical solution, credit endorsement of a third-party service organization is replaced with credit of the internet of things gateway, to help reduce risks of privacy leakage and a single-point attack.

With reference to the third aspect, in some implementations, the first information includes a first identity of the internet of things user and first authentication information, the first authentication information indicates a first authentication tag on which first encryption processing is performed, and the first authentication tag is an authentication tag of the internet of things user; and/or the fourth authentication information indicates a fourth authentication tag on which fourth encryption processing is performed; and that the first apparatus performs authentication on the terminal device based on the fourth message includes: The first apparatus performs the fourth encryption processing on the first authentication tag to obtain eighth authentication information; and when the eighth authentication information is the same as the fourth authentication information, the first apparatus determines that authentication on the terminal device succeeds.

In the foregoing technical solution, authentication on the internet of things user or the terminal device can be implemented based on the authentication tag. Compared with a cryptographic algorithm-based public and private key authentication scheme, this solution can simplify authentication logic and reduce key management overheads.

With reference to any one of the third aspect or the implementations, in some other implementations, the third message further includes third information, the third information indicates a first key on which fifth encryption processing is performed, and the first key is used to determine a second key used when the internet of things user communicates with the terminal device; the fourth message further includes fourth information, the fourth information indicates a third key on which sixth encryption processing is performed, and the third key is generated by the terminal device and is used to determine the second key; and the method further includes: The first apparatus determines the second key based on the fourth information and the first key.

In this way, in this technical solution, the internet of things user and the terminal device can simply and quickly obtain a secure session key through negotiation to encrypt interaction information, so as to effectively ensure privacy and security of original internet of things data in a transmission process, and help avoid common security attacks such as eavesdropping and tampering.

With reference to any one of the third aspect or the implementations, in some other implementations, at least one of the first encryption processing, the fourth encryption processing, the fifth encryption processing, and the sixth encryption processing is based on a hash algorithm and/or an exclusive OR algorithm.

In this technical solution, each piece of encryption processing is based on the hash algorithm and/or the exclusive OR algorithm, so that authentication logic can be simplified, and computing overheads and communication overheads in an authentication process can be reduced. This helps improve efficiency of authentication between the terminal device and the internet of things user, and can meet a requirement of an application layer for a low latency of an internet of things service.

With reference to any one of the third aspect or the implementations, in some other implementations, the first authentication information satisfies: Eᵢ=h(βᵢ∥IDᵢ∥DIDⱼ), βᵢ=h(Tagᵢ∥T₁), Tagi=Wi ⊕ αᵢ, and Wᵢ=h(rᵢ∥PWᵢ); and/or the fourth authentication information satisfies: γᵢ=h(Tagᵢ'∥DIDⱼ); and/or the eighth authentication information satisfies: γᵢ'=h(Tagᵢ∥DIDⱼ); and/or the third information satisfies: θᵢ=Kᵢ⊕βᵢ, βᵢ=h(Tagᵢ∥T₁), Tagᵢ=W_{i⊕}αᵢ, and Wᵢ=h(rᵢ∥PWᵢ); and/or the fourth information satisfies: Xᵢⱼ=h(Kᵢ'∥T₄)⊕Kⱼ, Kᵢ'=θᵢ⊕βᵢ', and βᵢ'=Fᵢⱼ⊕h(Tagⱼ∥T₃); and/or the second key satisfies: SKᵢⱼ=h(Kᵢ⊕Kⱼ') and Kⱼ'=h(Kᵢ∥T₄)⊕Xᵢⱼ. i identifies the internet of things user, j identifies the terminal device, Eᵢ is the first authentication information, γᵢ is the fourth authentication information, yᵢ' is the eighth authentication information, θᵢ is the third information, Xᵢⱼ is the fourth information, SKᵢⱼ is the second key, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Kᵢ is the first key, Kⱼ' is the third key restored by the first apparatus, Kᵢ' is the first key restored by the terminal device, T₁ is a moment at which Tagᵢ is obtained, and T₄ is a moment at which the terminal device obtains Kᵢ'.

It should be noted that, if the internet of things user communicates with the terminal device or the internet of things gateway via a first apparatus (for example, a smartcard) or a second apparatus (for example, an auxiliary device), it may be understood that i may further identify the first apparatus or the second apparatus.

With reference to any one of the third aspect or the implementations, in some other implementations, the fourth message further includes a fourth timestamp, and the first timestamp indicates T₄; and the method further includes: The first apparatus obtains a current timestamp; and the first apparatus determines that a difference between the fourth timestamp and the current timestamp does not exceed a fifth preset threshold; and/or the third message further includes a first timestamp, and the first timestamp indicates T₁. The timestamp is carried to defend against a replay attack.

With reference to any one of the third aspect or the implementations, in some other implementations, the third message is a login request message.

According to a fourth aspect, this application provides an authentication method. The method includes: A second apparatus sends a first registration request message to an internet of things gateway, where the first registration request message is used to request to register an internet of things user corresponding to the second apparatus with the internet of things gateway, the first registration request message includes a first identity of the internet of things user and registration information, and the registration information includes a password that is of the internet of things user and that is encrypted by the second apparatus; and the second apparatus receives a smartcard from the internet of things gateway, where the smartcard includes a first authentication tag encrypted by the internet of things gateway, and the first authentication tag is an authentication tag of the internet of things user.

In the foregoing technical solution, the internet of things user may be registered with the internet of things gateway, and the internet of things gateway determines an authentication tag for the internet of things user and feeds back the authentication tag to the internet of things user, so that the terminal device and the internet of things gateway can subsequently perform authentication on the internet of things user based on the authentication tag.

With reference to the fourth aspect, in some implementations, the password that is of the internet of things user and that is encrypted by the second apparatus satisfies: Wᵢ=h(rᵢ∥PWᵢ); and/or the first authentication tag satisfies: Tagᵢ=h(IDᵢ∥K_{GTW}), and the first authentication tag encrypted by the internet of things gateway satisfies: αᵢ=Wᵢ⊕Tagᵢ. i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, ∥ represents concatenation or splicing, and rᵢ is a random number and is carried in the first registration request message and the smartcard.

It should be noted that, if the internet of things user communicates with the terminal device or the internet of things gateway via a first apparatus (for example, a smartcard) or a second apparatus (for example, an auxiliary device), it may be understood that i may further identify the first apparatus or the second apparatus.

With reference to any one of the fourth aspect or the implementations, in some other implementations, the first registration request message further includes a fifth timestamp, and the fifth timestamp indicates a moment at which the first registration request message is sent. The timestamp is carried to defend against a replay attack.

According to a fifth aspect, this application provides a communication apparatus. The apparatus includes modules or units configured to perform the method according to any one of the foregoing aspects or the possible implementations of the foregoing aspect.

According to a sixth aspect, this application provides a communication apparatus, including a processor. The processor is coupled to a memory, and may be configured to execute instructions in the memory, to implement the method according to any one of the foregoing aspects or the possible implementations of the foregoing aspect. Optionally, the apparatus further includes the memory. Optionally, the apparatus further includes a communication interface, and the processor is coupled to the communication interface.

In an implementation, the apparatus is a first apparatus, a terminal device, an internet of things gateway, or a second apparatus. When the apparatus is the first apparatus, the terminal device, the internet of things gateway, or the second apparatus, the communication interface may be a transceiver or an input/output interface.

In another implementation, the apparatus is a chip configured in a first apparatus, a terminal device, an internet of things gateway, or a second apparatus. When the apparatus is the chip configured in the first apparatus, the terminal device, the internet of things gateway, or the second apparatus, the communication interface may be an input/output interface.

Optionally, the transceiver may be a transceiver circuit. Optionally, the input/output interface may be an input/output circuit.

According to a seventh aspect, this application provides a processor, including an input circuit, an output circuit, and a processing circuit. The processing circuit is configured to: receive a signal through the input circuit, and output a signal through the output circuit, so that the processor performs the method according to any one of the foregoing aspects or the possible implementations of the foregoing aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, this application provides a communication apparatus, including a processor and a memory. The processor is configured to: read instructions stored in the memory, receive a signal by using the receiver, and transmit a signal by using the transmitter, to perform the method according to any one of the foregoing aspects or the possible implementations of the foregoing aspect.

Optionally, there are one or more processors, and there are one or more memories.

Optionally, the memory and the processor may be integrated together, or the memory and the processor may be disposed separately.

In a specific implementation process, the memory may be a non-transitory (non-transitory) memory, for example, a read-only memory (read-only memory, ROM). The memory and the processor may be integrated into a same chip, or may be separately disposed on different chips. A type of the memory and a manner in which the memory and the processor are disposed are not limited in this embodiment of this application.

It should be understood that, a related data exchange process such as sending of indication information may be a process of outputting the indication information from the processor, and receiving of capability information may be a process of receiving the input capability information by the processor. Specifically, data output by the processor may be output to a transmitter, and input data received by the processor may be from a receiver. The transmitter and the receiver may be collectively referred to as a transceiver.

The apparatus in the eighth aspect may be a chip, and the processor may be implemented by using hardware or by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be independently located outside the processor.

According to a ninth aspect, this application provides a computer-readable storage medium. The computer-readable storage medium stores a computer program or instructions. When the computer program or the instructions are executed, the method according to any one of the foregoing aspects or the possible implementations of the foregoing aspect is implemented.

According to a tenth aspect, this application provides a computer program product, including instructions. When the instructions are run, the method according to any one of the foregoing aspects or the possible implementations of the foregoing aspect is implemented.

According to an eleventh aspect, this application provides a communication system. The communication system includes the foregoing first apparatus, terminal device, internet of things gateway, and second apparatus.

### BRIEF DESCRIPTION OF DRAWINGS

FIG. 1 is a schematic diagram of an architecture of a communication system to which technical solutions of this application may be applied;
FIG. 2 is a schematic flowchart of an authentication method according to this application;
FIG. 3 is a schematic flowchart in which an internet of things user is registered with an internet of things gateway;
FIG. 4 shows an example of an internet of things user registration procedure according to this application;
FIG. 5 shows an example of bidirectional authentication and session key negotiation procedures between an internet of things user and a terminal device according to this application;
FIG. 6 is a schematic diagram of a structure of a possible apparatus according to an embodiment of this application; and
FIG. 7 is another schematic diagram of a structure of a possible apparatus according to an embodiment of this application.

### DESCRIPTION OF EMBODIMENTS

The following describes technical solutions of embodiments in this application with reference to accompanying drawings.

The technical solutions in embodiments of this application may be applied to various communication systems, for example, machine type communication (machine type communication, MTC), long term evolution-machine (long term evolution-machine, LTE-M), a device-to-device (device-to-device, D2D) network, a machine-to-machine (machine-to-machine, M2M) network, an internet of things (internet of things, IoT) network, or another network. The IoT network may include, for example, the internet of vehicles. Communication manners in an internet of vehicles system are collectively referred to as vehicle-to-X (vehicle-to-X, V2X, where X may represent everything). For example, V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

The technical solutions provided in this application may be further applied to a future communication system, for example, a 6th generation mobile communication system. This is not limited in this application.

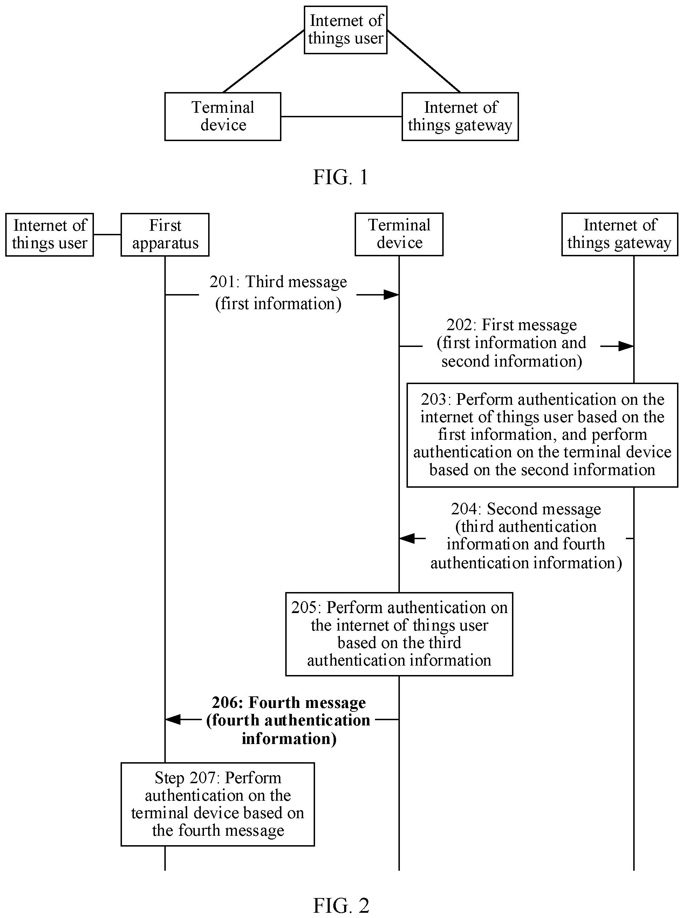

The internet of things is used as an example. FIG. 1 is a schematic diagram of an architecture of a communication system to which technical solutions of this application may be applied.

As shown in FIG. 1, the network architecture includes an internet of things user, a terminal device, and an internet of things gateway. The internet of things user may initiate a collaboration task to the terminal device to perform internet of things data collection, data sharing, and data analysis, so as to provide an intelligent service for an application layer. The internet of things gateway may be configured to implement bidirectional authentication between the internet of things user and the terminal device.

The internet of things user may communicate with the terminal device or the internet of things gateway via some auxiliary devices or apparatuses. The auxiliary devices or apparatuses may be physical devices or apparatuses, or may be virtual devices or apparatuses. This is not limited in this application. For ease of description, a device or an apparatus used when the internet of things user communicates with the internet of things gateway is referred to as a first apparatus below, and a device or an apparatus used when the internet of things user communicates with the terminal device is referred to as a second apparatus below. The first apparatus and the second apparatus may be a same apparatus or different apparatuses. The internet of things user in this application may also be referred to as an internet of things entity, an internet of things entity user, a user, an internet of things subject, or the like, which are collectively described as an internet of things user below.

The terminal device in this application may also be referred to as user equipment, an internet of things terminal device, an access terminal, a subscriber unit, a subscriber station, a mobile station, a remote station, a remote terminal, a mobile device, a user terminal, a terminal, a wireless communication device, a user agent, a user apparatus, or the like, which are collectively referred to as a terminal below. The terminal may be an MTC terminal, a computer with a wireless transceiver function, an internet of things terminal, a virtual reality terminal device, an augmented reality terminal device, a wearable device, a vehicle, a terminal in D2D communication, a terminal in V2X communication, a terminal in smart office, a terminal in industrial control, a terminal in autonomous driving, a terminal in remote surgery, a terminal in a smart grid, a terminal in transportation security, a terminal in a smart city, a terminal in smart home, or the like. A specific technology and a specific device form used by the terminal are not limited in embodiments of this application.

The technical solutions of this application may be applied to different scenarios. In an example, an internet of things scenario may be a product manufacturing workshop with many pipelines, an internet of things user may be a senior technician, a terminal device may be a pipeline workbench, an internet of things gateway may be a general console of the product manufacturing workshop, and a collaboration task may be that the senior technician detects a product manufacturing status of a pipeline from the pipeline workbench and writes a control instruction. In another example, the technical solutions in this application may be further applied to a scenario such as IoT data management or digital asset management.

The following describes the technical solutions of this application by using the internet of things scenario as an example.

Currently, there are mainly three types of internet of things authentication schemes. First, digital certificate authentication is based on a public key infrastructure (public key infrastructure, PKI) architecture. After receiving a digital certificate application, a certificate authority (certificate authority, CA) uses information such as a public key and identity information of a certificate applicant and a validity period of a digital certificate as an original message and performs a hash operation on the original message to generate a digest, and generates a signature by using a CA private key. The digital signature and the original message of the applicant jointly form the digital certificate. In an entity communication process, after receiving the digital certificate, an identity verifier decrypts the digital signature by using a CA public key to generate a message digest, calculates a hash value of the original message to generate a digest, and compares the two digests to verify authenticity and integrity of certificate content, so as to implement public key authentication on a user/device. Then, a cryptographic algorithm is used to verify validity of a user identity. Common cryptographic technologies include a message authentication code and signature algorithms such as a digital signature, a group signature, and a ring signature based on an asymmetric encryption algorithm. The digital certificate based on the PKI architecture is a specific application of the digital signature algorithm. Finally, an authentication scheme based on identity-based encryption is designed to reduce key management load, and a certificate-free encryption scheme is developed to resolve a problem of key leakage in identity-based cryptography.

The existing internet of things authentication scheme mainly has three problems. First, most authentication schemes require assistance of a third-party service organization (for example, the digital certificate authentication based on the PKI architecture requires participation of the CA, and identity-based encryption requires participation of a private key generator (private key generator, PKG)). A centralized organization brings risks of privacy leakage and a single-point attack, reducing credibility of the authentication scheme. Second, most internet of things authentication schemes use complex cryptographic algorithms to design compute-intensive authentication schemes. These schemes provide secure authentication mechanisms, but are not applicable to internet of things terminal devices and internet of things users with limited resources, and cause huge key management overheads. Finally, most internet of things authentication schemes use public key cryptography to design complex system architectures and authentication logic. A complex authentication procedure causes high communication overheads, which violates latency-sensitive requirements of internet of things applications.

To resolve the foregoing problem, this application provides an authentication method and a communication apparatus, to implement bidirectional authentication between an internet of things user and an internet of things terminal device, thereby ensuring validity of an internet of things collaboration task and reliability of a collaboration process.

FIG. 2 is a schematic flowchart of an authentication method according to this application.

The method shown in FIG. 2 may be performed by a first apparatus, a terminal device, and an internet of things gateway, or may be performed by modules or units in the first apparatus, the terminal device, and the internet of things gateway. This is not limited in this application. An example in which the method is performed by the first apparatus, the terminal device, and the internet of things gateway is used below for description.

Step 201: The first apparatus sends a third message to the terminal device.

Correspondingly, the terminal device receives the third message from the first apparatus.

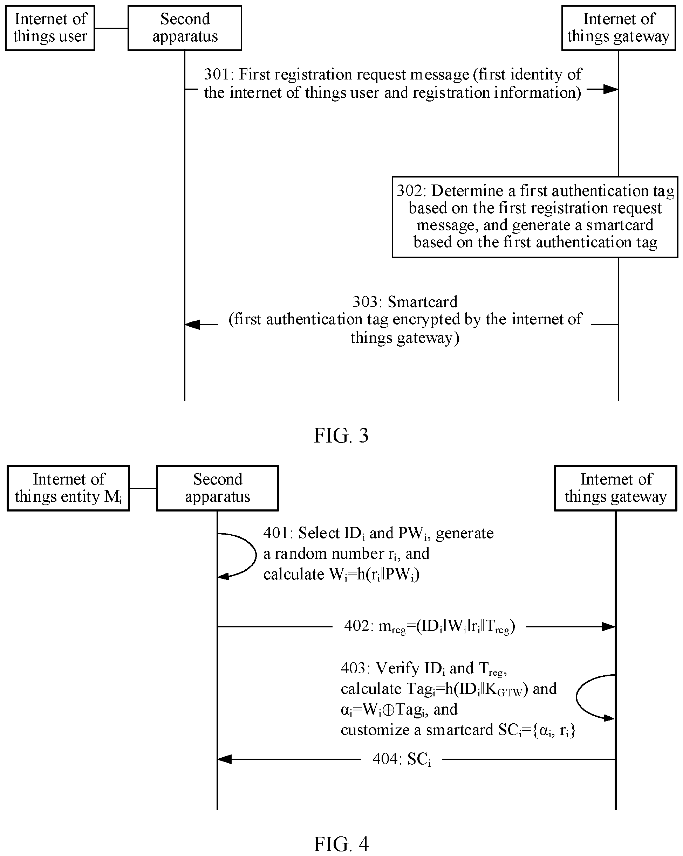

The first apparatus may be a smartcard. The smartcard may be customized by the internet of things gateway and sent to the internet of things user in a process in which the internet of things user is registered with the internet of things gateway. The smartcard may store a first authentication tag determined by the internet of things gateway for the internet of things user. The process in which the internet of things user is registered with the internet of things gateway is described in detail below with reference to FIG. 3.

The third message is used to request to log in to the terminal device. The third message may include first information, and the first information is used to perform authentication on an internet of things user that requests to log in to the terminal device.

In a possible implementation, the first information includes a first identity of the internet of things user and first authentication information. The first identity may be selected and determined by the internet of things user, and the first identity is carried in the first information, so that the internet of things gateway obtains, based on the received first identity, a third authentication tag corresponding to the identity. The first authentication information indicates a first authentication tag on which first encryption processing is performed. Optionally, the first encryption processing may be based on a hash algorithm and/or an exclusive OR algorithm.

Optionally, the third message may further carry a first timestamp, used to verify validity of the first information.

In a possible implementation, the third message may be a login request message.

Step 202: The terminal device sends a first message to the internet of things gateway based on the third message.

Correspondingly, the internet of things gateway receives the first message from the terminal device.

The first message includes the first information and second information. For description of the first information, refer to step 201. Details are not described herein again. The second information is used to perform authentication on the terminal device.

In a possible implementation, the second information includes a second identity of the terminal device and second authentication information. The second identity may be determined by the terminal device, or may be allocated by the internet of things gateway to the terminal device. This is not limited in this application. The second identity is carried in the second information, so that the internet of things gateway obtains, based on the received second identity, a fourth authentication tag corresponding to the identity. The second authentication information indicates information about a second authentication tag on which second encryption processing is performed, and the second authentication tag is an authentication tag of the terminal device. Optionally, the second encryption processing may be based on a hash algorithm and/or an exclusive OR algorithm.

Optionally, if the third message further carries the first timestamp, the terminal device may further obtain a current timestamp, and determine whether a difference between the first timestamp and the current timestamp is greater than a fourth preset threshold, to verify validity of the first information carried in the third message. If the difference does not exceed the fourth preset threshold, the terminal device determines that the first information carried in the third message is valid; or if the difference exceeds the fourth preset threshold, the terminal device determines that the first information carried in the third message is invalid. The fourth preset threshold is an acceptable transmission delay. The third message carries the first timestamp to defend against a replay attack.

Optionally, the first message may further carry the first timestamp and/or a second timestamp. The first timestamp is used to verify validity of the first information, and the second timestamp is used to verify validity of the second information.

Step 203: The internet of things gateway performs authentication on the internet of things user based on the first information, and/or performs authentication on the terminal device based on the second information.

In a possible implementation, the first information includes a first identity of the internet of things user and first authentication information. The internet of things gateway obtains, based on the first identity, a third authentication tag corresponding to the first identity, and performs first encryption processing on the third authentication tag to obtain fifth authentication information. The internet of things gateway determines, by determining whether the fifth authentication information is the same as the first authentication information, whether authentication on the internet of things user succeeds. If the fifth authentication information is the same as the first authentication information, the internet of things gateway determines that authentication on the internet of things user succeeds; or if the fifth authentication information is different from the first authentication information, the internet of things gateway determines that authentication on the internet of things user fails.

In a possible implementation, the second information includes a second identity of the terminal device and second authentication information. The internet of things gateway obtains, based on the second identity, a fourth authentication tag corresponding to the second identity, and performs second encryption processing on the fourth authentication tag to obtain sixth authentication information. The internet of things gateway determines, by determining whether the sixth authentication information is the same as the second authentication information, whether authentication on the terminal device succeeds. If the sixth authentication information is the same as the second authentication information, the internet of things gateway determines that authentication on the terminal device succeeds; or if the sixth authentication information is different from the second authentication information, the internet of things gateway determines that authentication on the terminal device fails.

If authentication on the internet of things user and the terminal device succeeds, the internet of things gateway may continue to perform step 204.

If authentication on the internet of things user and/or the terminal device succeeds, the internet of things gateway may terminate a session.

Optionally, if the first message further carries the first timestamp and/or the second timestamp, the internet of things gateway may further obtain a current timestamp, and determine whether a difference between the first timestamp and the current timestamp is greater than a first preset threshold, and/or determine whether a difference between the second timestamp and the current timestamp is greater than a second preset threshold, to verify validity of the first information and the second information carried in the first message. If the difference does not exceed the first preset threshold, the internet of things gateway determines that the first information carried in the first message is valid; or if the difference exceeds the first preset threshold, the internet of things gateway determines that the first information carried in the first message is invalid. If the difference does not exceed the second preset threshold, the internet of things gateway determines that the second information carried in the first message is valid; or if the difference exceeds the second preset threshold, the internet of things gateway determines that the second information carried in the first message is invalid. The first preset threshold and the second preset threshold are acceptable transmission delays. The first message carries the first timestamp and/or the second timestamp to defend against a replay attack.

Step 204: The internet of things gateway sends a second message to the terminal device.

Correspondingly, the terminal device receives the second message from the internet of things gateway.

The second message includes third authentication information and fourth authentication information. The third authentication information is used by the terminal device to perform authentication on the internet of things user. The fourth authentication information is used by the internet of things user to perform authentication on the terminal device.

In a possible implementation, the third authentication information indicates a third authentication tag on which third encryption processing is performed, and/or the fourth authentication information indicates a fourth authentication tag on which fourth encryption processing is performed. Optionally, the third encryption processing and/or the fourth encryption processing may be based on a hash algorithm and/or an exclusive OR algorithm.

Optionally, the second message may further carry a third timestamp, and the third timestamp is used to verify validity of the third authentication information.

Step 205: The terminal device performs authentication on the internet of things user based on the third authentication information.

In a possible implementation, the terminal device determines seventh authentication information based on the third authentication information, where the seventh authentication information indicates the third authentication tag on which the first encryption processing is performed. The terminal device determines, by determining whether the seventh authentication information is the same as the first authentication information, whether authentication on the internet of things user succeeds. If the seventh authentication information is the same as the first authentication information, the terminal device determines that authentication on the internet of things user succeeds; or if the seventh authentication information is different from the first authentication information, the terminal device determines that authentication on the internet of things user fails.

If authentication on the internet of things user succeeds, the terminal device may continue to perform step 206.

If authentication on the internet of things user fails, the terminal device may reject a login request of the internet of things user and return rejection information.

Optionally, if the second message further carries the third timestamp, the terminal device may further obtain a current timestamp, and determine whether a difference between the third timestamp and the current timestamp is greater than a third preset threshold, to verify validity of the third authentication information carried in the second message. If the difference does not exceed the third preset threshold, the terminal device determines that the third authentication information carried in the second message is valid; or if the difference exceeds the third preset threshold, the terminal device determines that the third authentication information carried in the second message is invalid. The third preset threshold is an acceptable transmission delay. The second message carries the third timestamp to defend against a replay attack.

Step 206: The terminal device sends a fourth message to the first apparatus.

Correspondingly, the first apparatus receives the fourth message from the terminal device.

The fourth message includes fourth authentication information. The fourth authentication information is used by the internet of things user to perform authentication on the terminal device. The fourth authentication information is determined by the internet of things gateway.

Optionally, the fourth message may further carry a fourth timestamp, and the fourth timestamp is used to verify validity of the information in the fourth message.

Step 207: The first apparatus performs authentication on the terminal device based on the fourth message.

In a possible implementation, the first apparatus performs fourth encryption processing on the first authentication tag to obtain eighth authentication information. The first apparatus determines, by determining whether the eighth authentication information is the same as the fourth authentication information, whether authentication on the terminal device succeeds. If the eighth authentication information is the same as the fourth authentication information, the first apparatus determines that authentication on the terminal device succeeds; or if the eighth authentication information is different from the fourth authentication information, the first apparatus determines that authentication on the terminal device fails.

Optionally, if the fourth message further carries the fourth timestamp, the first apparatus may further obtain a current timestamp, and determine whether a difference between the fourth timestamp and the current timestamp is greater than a fifth preset threshold, to verify validity of the information carried in the fourth message. If the difference does not exceed the fifth preset threshold, the first apparatus determines that the information carried in the fourth message is valid; or if the difference exceeds the fifth preset threshold, the first apparatus determines that the information carried in the fourth message is invalid. The fifth preset threshold is an acceptable transmission delay. The fourth message carries the fourth timestamp to defend against a replay attack.

In the foregoing technical solution, when the internet of things user needs to publish a collaboration task, the first apparatus may send, to the terminal device, information used to perform authentication on the internet of things user. The terminal device sends, to the internet of things gateway, both the information used to perform authentication on the internet of things user and the information used to perform authentication on the terminal device. The internet of things gateway may perform authentication on the internet of things user and the terminal device based on the received information, locally stored information related to the internet of things user, and locally stored information related to the terminal device. When authentication on the internet of things user and the terminal device succeeds, the internet of things gateway may send, to the terminal device, the information used by the terminal device to perform authentication on the internet of things user and the information used by the internet of things user to perform authentication on the terminal device. The terminal device performs authentication on the internet of things user based on the received information. When authentication on the internet of things user succeeds, the terminal device may send, to the internet of things user, the information that is sent by the internet of things gateway and that is used by the internet of things user to perform authentication on the terminal device, so that the internet of things user performs authentication on the terminal device. In this way, this technical solution can implement bidirectional authentication between the internet of things user and the terminal device, to ensure validity of an internet of things collaboration task and reliability of a collaboration process. In addition, in this technical solution, credit endorsement of a third-party service organization is replaced with credit of the internet of things gateway, to help reduce risks of privacy leakage and a single-point attack. In addition, in this technical solution, each piece of encryption processing is based on the hash algorithm and/or the exclusive OR algorithm, so that authentication logic can be simplified, and computing overheads and communication overheads in an authentication process can be reduced. This helps improve efficiency of authentication between the terminal device and the internet of things user, and can meet a requirement of an application layer for a low latency of an internet of things service.

In some other embodiments, when bidirectional authentication between the internet of things user and the terminal device is completed, session key negotiation between the internet of things user and the terminal device may be further implemented. In a possible implementation, the third message further includes third information, the third information indicates a first key on which fifth encryption processing is performed, and the first key is used to determine a second key used when the internet of things user communicates with the terminal device. After receiving the third message, the terminal device may determine the second key (that is, a session key) based on the third information and a third key, where the third key is generated by the terminal device. The fourth message further includes fourth information, and the fourth information indicates a third key on which sixth encryption processing is performed. After receiving the fourth message, the first apparatus may determine the second key (that is, a session key) based on the fourth information and the first key. In this way, in this technical solution, the internet of things user and the terminal device can simply and quickly obtain a secure session key through negotiation to encrypt interaction information, so as to effectively ensure privacy and security of original internet of things data in a transmission process, and help avoid common security attacks such as eavesdropping and tampering.

The fifth encryption processing and/or the sixth encryption processing may be based on a hash algorithm and/or an exclusive OR algorithm.

Certainly, the session key negotiation between the internet of things user and the terminal device may be performed after or before the bidirectional authentication between the internet of things user and the terminal device is completed. This is not limited in this application.

It should be noted that the first preset threshold, the second preset threshold, the third preset threshold, the fourth preset threshold, and the fifth preset threshold may be the same or different, depending on a situation.

FIG. 3 is a schematic flowchart in which an internet of things user is registered with an internet of things gateway.

The method shown in FIG. 3 may be performed by a second apparatus and the internet of things gateway, or may be performed by modules or units in the second apparatus and the internet of things gateway. This is not limited in this application. An example in which the method is performed by the second apparatus and the internet of things gateway is used below for description.

Step 301: The second apparatus sends a first registration request message to the internet of things gateway.

Correspondingly, the internet of things gateway receives the first registration request message from the second apparatus.

The first registration request message is used to request to register an internet of things user corresponding to the second apparatus with the internet of things gateway. The first registration request message may include a first identity of the internet of things user and registration information. The registration information includes a password that is of the internet of things user and that is encrypted by the second apparatus. The password of the internet of things user may be selected or determined by the internet of things user.

Optionally, the first registration request message further includes a fifth timestamp, and the fifth timestamp indicates a moment at which the first registration request message is sent.

Step 302: The internet of things gateway determines a first authentication tag based on the first registration request message, and generates a smartcard based on the first authentication tag.

The first authentication tag is an authentication tag of the internet of things user. The first authentication tag may be related to the first identity of the internet of things user and a key of the internet of things gateway. The smartcard includes the first authentication tag encrypted by the internet of things gateway.

The internet of things gateway may generate a correspondence between the first authentication tag and the first identity, to subsequently perform authentication on the internet of things user.

Step 303: The internet of things gateway sends the smartcard to the second apparatus.

Correspondingly, the second apparatus receives the smartcard from the internet of things gateway.

In this way, the smartcard carries information related to the first authentication tag. Therefore, the internet of things user may subsequently implement bidirectional authentication with the terminal device by using the smartcard.

The following describes the technical solutions of this application with reference to specific examples.

FIG. 4 shows an example of an internet of things user registration procedure according to this application.

In FIG. 4, an internet of things user Mᵢ may correspond to the internet of things user described above, an internet of things gateway may correspond to the internet of things gateway described above, and a second apparatus may correspond to the second apparatus described above.

Step 401: The internet of things user Mᵢ selects an identity IDᵢ and a password PW;, generates a random number rᵢ by using the second apparatus, and calculates Wᵢ=h(rᵢ∥PWᵢ).

i represents an i^{th} internet of things user, h() represents a one-way hash function, and II represents concatenation or splicing.

Step 402: The second apparatus generates a message m_{reg}=(IDᵢ∥Wᵢ∥rᵢ∥T_{reg}), and sends the message to the internet of things gateway.

Correspondingly, the internet of things gateway receives the message m_{reg}=(IDᵢ∥Wᵢ∥rᵢ∥T_{reg}) from the second apparatus.

T_{reg} represents a timestamp, used to defend against a replay attack.

In a possible implementation, the message m_{reg} may be a registration request message.

Step 403: After receiving m_{reg}, the internet of things gateway first verifies the identity IDᵢ and the timestamp T_{reg} of the internet of things user Mᵢ; then calculates an authentication tag Tagᵢ=h(IDᵢ∥K_{GTW}) and αᵢ=Wᵢ⊕Tagᵢ of the internet of things user Mi; and customizes a smartcard SCᵢ including αᵢ and rᵢ.

αᵢ=Wᵢ⊕Tagᵢ is calculated to hide the authentication tag Tagᵢ of the internet of things user Mi, and only a device or an apparatus that learns of αᵢ and Wᵢ can restore Tag;; and ⊕ represents exclusive OR.

Step 404: The internet of things gateway sends the smartcard SCᵢ to the second apparatus.

Correspondingly, the second apparatus receives the smartcard SCᵢ from the internet of things gateway.

In this way, the internet of things user Mᵢ can be registered with the internet of things gateway in the foregoing procedure.

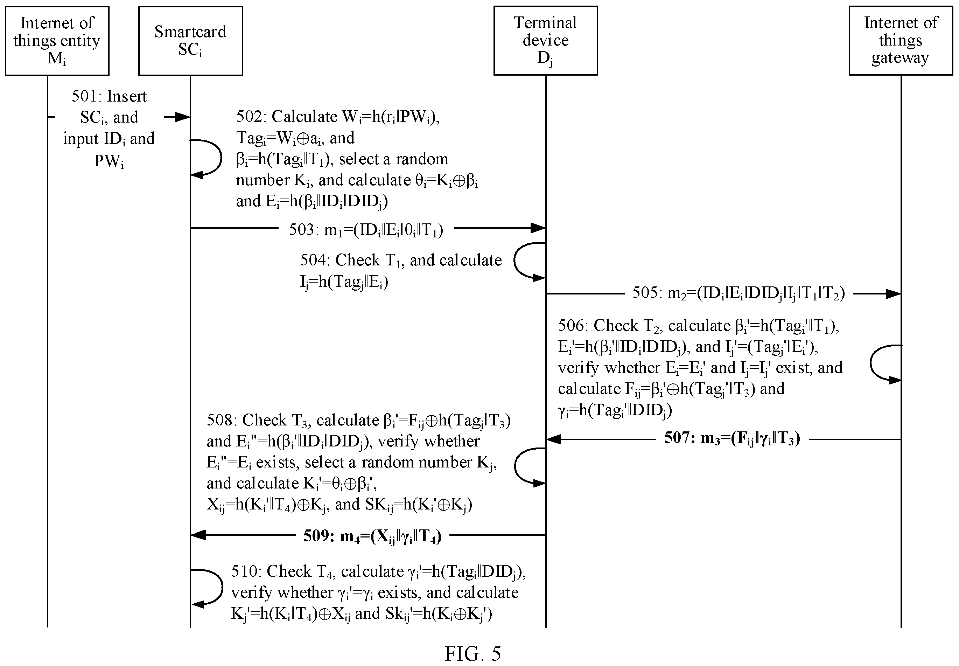

FIG. 5 shows an example of bidirectional authentication and session key negotiation procedures between an internet of things user and a terminal device according to this application.

In FIG. 5, an internet of things user Mᵢ may correspond to the internet of things user described above, a smartcard may correspond to the first apparatus described above, a terminal device Dⱼ may correspond to the terminal device described above, and an internet of things gateway may correspond to the internet of things gateway described above.

Before steps shown in FIG. 5 are performed, the internet of things user Mᵢ has completed a registration procedure on the internet of things gateway device. In FIG. 5, an example in which the internet of things user Mᵢ completes the registration procedure shown in FIG. 4 is used. In addition, the internet of things gateway has allocated a unique identity DIDⱼ to the terminal device Dⱼ, and obtained, through calculation, an authentication tag Tagⱼ=h(DIDⱼ∥K_{GTW}) of the terminal device Dⱼ. The terminal device Dⱼ stores DIDⱼ and Tagⱼ, and only the internet of things gateway and the terminal device Dⱼ store Tagⱼ. h() represents a one-way hash function, and K_{GTW} represents a key of the internet of things gateway.

Step 501: The internet of things user Mᵢ inserts a smartcard SC; into the terminal device Dⱼ, and inputs an identity IDᵢ and a password PWᵢ of the internet of things user Mi, to complete authentication performed by the smartcard SC; on the internet of things user.

Step 502: The smartcard SCᵢ calculates Wᵢ=h(rᵢ∥PWᵢ), Tagᵢ=W_{i⊕}αᵢ, and βᵢ=h(Tagᵢ∥T₁), and then selects a random number Kᵢ and calculates θᵢ=Kᵢ⊕βᵢ and Eᵢ=h(βᵢ∥IDᵢ∥DIDⱼ).

i represents an i^{th} internet of things user, j represents a j^{th} terminal device, h() represents a one-way hash function, ∥ represents concatenation or splicing, ⊕ represents exclusive OR, Tag; may correspond to the foregoing first authentication tag, T₁ represents a timestamp, and is a moment at which Tagᵢ is obtained, and Kᵢ is a negotiation key used to calculate a session key between the internet of things user Mᵢ and the terminal device Dⱼ, and may correspond to the foregoing first key. θᵢ=Kᵢ⊕βᵢ is calculated to hide Kᵢ, and only a device or an apparatus that learns of θᵢ and Wᵢ can restore Kᵢ.

Step 503: The smartcard SCᵢ sends a message m₁=(IDᵢ∥Eᵢ∥θᵢ∥T₁) to the terminal device Dⱼ.

Correspondingly, the terminal device Dⱼ receives the message m₁=(IDᵢ∥Eᵢ∥θᵢ∥T₁) from the smartcard SCᵢ.

In a possible implementation, the message m₁ may be a login request message.

Step 504: After receiving the message m₁, the terminal device Dⱼ first checks whether |T₁-T_{C}|≤ΔT exists; and if |T₁-T_{C}|≤ΔT does not exist, the terminal device Dj rejects a login request of the internet of things user Mi, or if |T₁-T_{C}|≤ΔT exists, the terminal device Dⱼ calculates Iⱼ=h(Tagⱼ∥Eᵢ).

Tc represents a current timestamp, ΔT is an acceptable transmission delay, and Tagⱼ may correspond to the foregoing second authentication tag.

Step 505: The terminal device Dⱼ sends a message m₂=(IDᵢ∥Eᵢ∥DIDⱼ∥Iⱼ∥T₁∥T₂) to the internet of things gateway.

Correspondingly, the internet of things gateway receives the message m₂=(IDᵢ∥Eᵢ∥DIDⱼ∥Iⱼ∥T₁∥T₂) from the terminal device Dⱼ.

T₂ represents a timestamp, and is a moment at which the message m₂ is sent.

Step 506: After receiving the message m₂, the internet of things gateway first checks whether |T₂-T_{C}'|≤ΔT exists; and if |T₂-T_{C}'|≤ΔT does not exist, the internet of things gateway returns error information and terminates a session, or if |T₂-T_{C}'|≤ΔT exists, the internet of things gateway calculates βᵢ'=h(Tagᵢ'∥T₁), Eᵢ'=h(βᵢ'∥IDᵢ∥DIDⱼ), and Iⱼ'=h(Tagⱼ'∥Eᵢ'), and then the internet of things gateway verifies whether Eᵢ'=Eᵢ and Iⱼ'=Iⱼ exist; and if Eᵢ'=Eᵢ and Iⱼ'=Iⱼ do not exist, the internet of things gateway terminates a session, or if Eᵢ'=Eᵢ and Iⱼ'=Iⱼ exist, the internet of things gateway accepts the internet of things user Mi, calculates Fᵢⱼ=βᵢ'⊕h(Tagⱼ'∥T₃) and γᵢ=h(Tagᵢ'∥DIDⱼ), and performs step 507.

Tc' represents a current timestamp, ΔT is an acceptable transmission delay, T₃ represents a timestamp, and is a moment at which the internet of things gateway completes authentication on the internet of things user Mᵢ and the terminal device Dⱼ, γᵢ is used by the internet of things user M; to perform authentication on the terminal device Dⱼ, Tagᵢ' may correspond to the foregoing third authentication tag, and Tagⱼ' may correspond to the foregoing fourth authentication tag. Fᵢⱼ=βᵢ'⊕h(Tagⱼ∥T₃) is calculated to hide βᵢ', and only an authorized terminal device that has Tagⱼ can restore βᵢ'.

In step 506, because the internet of things gateway has a real authentication tag of an internet of things user that has been registered with the internet of things gateway, the internet of things gateway may determine, by verifying whether Eᵢ'=Eᵢ and Iⱼ'=Iⱼ exist, whether information in the received message m₂ is valid. If Eᵢ'=Eᵢ and Iⱼ'=Iⱼ do not exist, it indicates that the internet of things user Mᵢ does not have a correct authentication tag, and in this case, the internet of things gateway may terminate the session. If E;'=E; and Iⱼ'=Iⱼ exist, it indicates that the internet of things user Mᵢ has a correct authentication tag Tag;, and in this case, the internet of things gateway may accept the internet of things user Mᵢ.

Step 507: The internet of things gateway sends a message m₃=(Fᵢⱼ∥γᵢ∥T₃) to the terminal device Dⱼ.

Correspondingly, the terminal device Dⱼ receives the message m₃=(Fᵢⱼ∥γᵢ∥T₃) from the internet of things gateway.

T₃ represents a timestamp, and is a moment at which the internet of things gateway completes authentication on the internet of things user Mᵢ and the terminal device Dⱼ.

Step 508: After receiving the message m₃, the terminal device Dⱼ first checks whether |T₃-T_{C}"|≤ΔT exists; and if |T₃-TC"|≤ΔT does not exist, the terminal device Dⱼ terminates a current session, or if |T₃-T_{C}"|≤ΔT exists, the terminal device Dⱼ calculates βᵢ'=Fᵢⱼ⊕h(Tagⱼ∥T₃) and Eᵢ"=h(βᵢ'∥IDᵢ∥DIDⱼ), and then the terminal device Dⱼ verifies whether Eᵢ"=Eᵢ exists; and if Eᵢ"=Eᵢ does not exist, the terminal device Dⱼ rejects a login request of the internet of things user Mᵢ and returns rejection information, or if Eᵢ"=Eᵢ exists, the terminal device Dⱼ accepts a login request of the internet of things user Mᵢ and/or a collaboration task initiated by the internet of things user Mi; and then the terminal device Dⱼ selects a random number Kⱼ, calculates Kᵢ'=θᵢ ⊕ β₁', Xᵢⱼ=h(Kᵢ'∥T₄) ⊕Kⱼ, and SKᵢⱼ=h(Kᵢ'⊕Kⱼ), and performs step 509.

Tc" represents a current timestamp, ΔT is an acceptable transmission delay, T₄ represents a timestamp, and is a moment at which Kᵢ' is obtained, and Kⱼ is a negotiation key used to calculate a session key between the internet of things user Mᵢ and the terminal device Dⱼ, and may correspond to the foregoing third key. Xᵢⱼ=h(Kᵢ'∥T₄)⊕Kⱼ is calculated to hide Kⱼ, and only a device or an apparatus that learns of Xᵢⱼ and h(Kᵢ'∥T₄) can restore Kⱼ.

In step 508, the terminal device Dⱼ determines, by verifying whether Eᵢ"=Eᵢ exists, that the internet of things user Mᵢ is authorized. If Eᵢ"=Eᵢ does not exist, it indicates that the internet of things user Mᵢ is unauthorized, and in this case, the terminal device Dⱼ may reject the login request of the internet of things user Mᵢ and return the rejection information. If Eᵢ"=Eᵢ exists, it indicates that the internet of things user Mᵢ is authorized, and in this case, the terminal device Dⱼ may accept the login request of the internet of things user Mᵢ and the collaboration task initiated by the internet of things user Mᵢ.

Step 509: The terminal device Dⱼ sends a message m₄=(Xᵢⱼ∥γᵢ∥T₄) to the smartcard SCᵢ.

Correspondingly, the smartcard SCᵢ receives the message m₄=(Xᵢⱼ∥γᵢ∥T₄) from the terminal device Dⱼ.

T₄ represents a timestamp, and the message m₄=(Xᵢⱼ∥γᵢ∥T₄) may be used to determine a session key between the internet of things user Mᵢ and the terminal device Dⱼ.

Step 510: After receiving the message m₄, the smartcard SC; first checks whether |T₄-T_{C}‴|≤ΔT exists; and if |T₄-T_{C}‴|≤ΔT does not exist, the smartcard SCᵢ terminates a session, or if |T₄-T_{C}‴|≤ΔT exists, the smartcard SC; calculates y;'=h(Tag;IIDΠy), and then the smartcard SC; verifies whether γᵢ'=γᵢ exists; and if γ_{i'}=γᵢ does not exist, the smartcard SCᵢ terminates a session, or if y;'=y; exists, the smartcard SCᵢ calculates Kⱼ'=h(Kᵢ∥T₄) ⊕Xᵢⱼ, and further calculates a session key Skᵢⱼ'=h(Kᵢ⊕Kⱼ').

T_{C}‴ represents a current timestamp, and ΔT is an acceptable transmission delay.

In step 510, because only a terminal device on which authentication performed by the internet of things gateway succeeds can obtain γᵢ calculated based on Tagᵢ, the smartcard SC; may determine, by verifying whether γᵢ'=γᵢ exists, whether an identity of a sender (that is, the terminal device Dⱼ) of the message m₄ is valid. If γᵢ'=γᵢ does not exist, it indicates that the identity of the terminal device Dⱼ is invalid, and in this case, the smartcard SCᵢ may terminate the session; or if γᵢ'=γᵢ exists, it indicates that the identity of the terminal device Dⱼ is valid, to complete authentication performed by the smartcard SC; on the terminal device Dⱼ. Then, the smartcard SCᵢ restores Kⱼ'=h(Kᵢ∥T₄)⊕Xᵢⱼ, and further calculates the session key Skᵢⱼ'=h(Kᵢ⊕Kⱼ'). In this case, Skᵢⱼ'=Skᵢⱼ. Skᵢⱼ' may be used to ensure security and confidentiality of a subsequent information exchange process between the internet of things user Mᵢ and the terminal device Dⱼ.

It should be noted that ΔT in steps 504, 506, 508, and 510 may be the same or different, depending on a situation.

In the foregoing technical solutions, details are as follows:
(1) First, based on an exclusive OR operation, high key management overheads are avoided, which helps simplify authentication logic.
(2) Second, based on a hash algorithm with simple operations, communication data is compressed, which improves communication efficiency and helps reduce resource consumption and a communication delay.
(3) Finally, credit endorsement of a third-party service organization is replaced with credit of the internet of things gateway, which helps avoid security and privacy threats and scalability bottlenecks caused by a centralized organization.

In this way, in the technical solutions of this application, lightweight and efficient bidirectional authentication and session key negotiation between the internet of things user and the terminal device in the internet of things scenario can be implemented based on simple exclusive OR and hash operations, to ensure validity of an internet of things collaboration task and security of a task execution process.

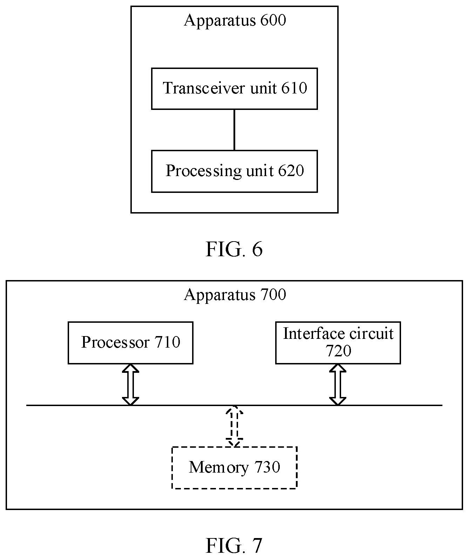

The foregoing describes, in detail with reference to FIG. 2 to FIG. 5, the methods provided in this application. The following describes in detail apparatus embodiments of this application with reference to FIG. 6 and FIG. 7. It may be understood that, to implement the functions in the foregoing embodiments, the apparatus in FIG. 6 or FIG. 7 includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

FIG. 6 and FIG. 7 each are a schematic diagram of a structure of a possible apparatus according to an embodiment of this application. The apparatus may be configured to implement functions of the first apparatus, the terminal device, the internet of things gateway, or the second apparatus in the foregoing method embodiments, and therefore can also implement beneficial effects of the foregoing method embodiments.

As shown in FIG. 6, the apparatus 600 includes a transceiver unit 610 and a processing unit 620.

When the apparatus 600 is configured to implement a function of the internet of things gateway in the foregoing method embodiments, the transceiver unit 610 is configured to receive a first message from a terminal device, where the first message includes first information and second information, the first information is used to perform authentication on an internet of things user that requests to log in to the terminal device, and the second information is used to perform authentication on the terminal device; the processing unit 620 is configured to: perform authentication on the internet of things user based on the first information, and perform authentication on the terminal device based on the second information; and the transceiver unit 610 is further configured to send a second message to the terminal device when authentication on the internet of things user and the terminal device succeeds, where the second message includes third authentication information and fourth authentication information, the third authentication information is used by the terminal device to perform authentication on the internet of things user, and the fourth authentication information is used by the internet of things user to perform authentication on the terminal device.

Optionally, the first information includes a first identity of the internet of things user and first authentication information, the first authentication information indicates a first authentication tag on which first encryption processing is performed, and the first authentication tag is an authentication tag of the internet of things user. The processing unit 620 is specifically configured to: obtain, based on the first identity, a third authentication tag corresponding to the first identity, and perform the first encryption processing on the third authentication tag to obtain fifth authentication information; and when the fifth authentication information is the same as the first authentication information, determine that authentication on the internet of things user succeeds.

Optionally, the second information includes a second identity of the terminal device and second authentication information, the second authentication information indicates a second authentication tag on which second encryption processing is performed, and the second authentication tag is an authentication tag of the terminal device. The processing unit 620 is specifically configured to: obtain, based on the second identity, a fourth authentication tag corresponding to the second identity, and perform the second encryption processing on the fourth authentication tag to obtain sixth authentication information; and when the sixth authentication information is the same as the second authentication information, determine that authentication on the terminal device succeeds.

Optionally, the third authentication information indicates the third authentication tag on which third encryption processing is performed; and/or the fourth authentication information indicates the fourth authentication tag on which fourth encryption processing is performed.

Optionally, at least one of the first encryption processing, the second encryption processing, the third encryption processing, and the fourth encryption processing is based on a hash algorithm and/or an exclusive OR algorithm.

Optionally, the first authentication information satisfies: Eᵢ=h(βᵢ∥IDᵢ∥DIDⱼ), βᵢ=h(Tagᵢ∥T₁), Tagᵢ=Wᵢ ⊕ αᵢ, and Wᵢ=h(rᵢ∥PWᵢ); and/or the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or the third authentication information satisfies: Fᵢⱼ=βᵢ'⊕h(Tagⱼ'∥T₃) and βᵢ'=h(Tagᵢ'∥T₁); and/or the fourth authentication information satisfies: γᵢ=h(Tagᵢ'∥DIDⱼ); and/or the fifth authentication information satisfies: Eᵢ'=h(βᵢ'∥IDᵢ∥DIDⱼ) and βᵢ'=h(Tagᵢ'∥T₁); and/or the sixth authentication information satisfies: Iⱼ'=h(Tagⱼ'∥Eᵢ'), Eᵢ'=h(βᵢ'∥IDᵢ∥DIDⱼ), and βᵢ'=h(Tagᵢ'∥T₁).

i identifies the internet of things user, j identifies the terminal device, Eᵢ is the first authentication information, Iⱼ is the second authentication information, Fᵢⱼ is the third authentication information, γᵢ is the fourth authentication information, Eᵢ' is the fifth authentication information, Iⱼ' is the sixth authentication information, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, T₁ is a moment at which Tagᵢ is obtained, and T₃ is a moment at which the internet of things gateway completes authentication on the internet of things user and the terminal device.

Optionally, the first message further includes a first timestamp and/or a second timestamp, the first timestamp indicates Ti, and the second timestamp indicates a moment at which the first message is sent. The processing unit 620 is further configured to: obtain a current timestamp; and determine that a difference between the first timestamp and the current timestamp does not exceed a first preset threshold, and/or determine that a difference between the second timestamp and the current timestamp does not exceed a second preset threshold.

Optionally, the second message further includes a third timestamp, and the third timestamp indicates T₃.

Optionally, the transceiver unit 610 is further configured to receive a first registration request message sent by a second apparatus, where the first registration request message is used to request to register the internet of things user with the internet of things gateway, the first registration request message includes the first identity of the internet of things user and registration information, and the registration information includes the password that is of the internet of things user and that is encrypted by the second apparatus. The processing unit 620 is further configured to: determine the first authentication tag based on the first registration request message, and generate a smartcard based on the first authentication tag, where the smartcard includes the first authentication tag encrypted by the internet of things gateway. The transceiver unit 610 is further configured to send the smartcard to the second apparatus.

Optionally, the password that is of the internet of things user and that is encrypted by the second apparatus satisfies: Wᵢ=h(rᵢ∥PWᵢ); and/or the first authentication tag satisfies: Tagᵢ=h(IDᵢ∥K_{GTW}), and the first authentication tag encrypted by the internet of things gateway satisfies: αᵢ=Wᵢ⊕Tagᵢ. i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, II represents concatenation or splicing, and rᵢ is a random number and is carried in the first registration request message and the smartcard.

Optionally, the first registration request message further includes a fifth timestamp, and the fifth timestamp indicates a moment at which the first registration request message is sent. The processing unit 620 is further configured to: obtain a current timestamp; and determine that a difference between the fifth timestamp and the current timestamp does not exceed a sixth preset threshold.

Optionally, the processing unit 620 is further configured to verify the first identity.

When the apparatus 600 is configured to implement a function of the terminal device in the foregoing method embodiments, the transceiver unit 610 is configured to: receive a third message from a first apparatus, where the third message is used to request to log in to the terminal device, the third message includes first information, and the first information is used to perform authentication on an internet of things user that requests to log in to the terminal device; send a first message to an internet of things gateway based on the third message, where the first message includes the first information and second information, and the second information is used to perform authentication on the terminal device; and receive a second message from the internet of things gateway, where the second message includes third authentication information and fourth authentication information, the third authentication information is used by the terminal device to perform authentication on the internet of things user, and the fourth authentication information is used by the internet of things user to perform authentication on the terminal device; the processing unit 620 is configured to perform authentication on the internet of things user based on the third authentication information; and the transceiver unit 610 is further configured to send a fourth message to the first apparatus when authentication on the internet of things user succeeds, where the fourth message includes the fourth authentication information.

Optionally, the first information includes a first identity of the internet of things user and first authentication information, the first authentication information indicates a first authentication tag on which first encryption processing is performed, and the first authentication tag is an authentication tag of the internet of things user.

Optionally, the second information includes a second identity of the terminal device and second authentication information, the second authentication information indicates a second authentication tag on which second encryption processing is performed, and the second authentication tag is an authentication tag of the terminal device.

Optionally, the third authentication information indicates a third authentication tag on which third encryption processing is performed; and the processing unit 620 is specifically configured to: determine seventh authentication information based on the third authentication information, where the seventh authentication information indicates the third authentication tag on which first encryption processing is performed; and when the seventh authentication information is the same as the first authentication information, determine that authentication on the internet of things user succeeds.

Optionally, the fourth authentication information indicates a fourth authentication tag on which fourth encryption processing is performed.

Optionally, the third message further includes third information, the third information indicates a first key on which fifth encryption processing is performed, and the first key is used to determine a second key used when the internet of things user communicates with the terminal device. The fourth message further includes fourth information, the fourth information indicates a third key on which sixth encryption processing is performed, and the third key is generated by the terminal device and is used to determine the second key. The processing unit 620 is further configured to determine the second key based on the third information and the third key.

Optionally, at least one of the first encryption processing, the second encryption processing, the third encryption processing, the fourth encryption processing, the fifth encryption processing, and the sixth encryption processing is based on a hash algorithm and/or an exclusive OR algorithm.

Optionally, the first authentication information satisfies: Eᵢ=h(βᵢ∥IDᵢ∥DIDⱼ), βᵢ=h(Tagᵢ∥T₁), Tagᵢ=Wᵢ ⊕ αᵢ, and Wᵢ=h(rᵢ∥PWᵢ); and/or the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or the third authentication information satisfies: Fᵢⱼ=βᵢ'⊕h(Tagⱼ'∥T₃) and βᵢ'=h(Tagᵢ'∥T₁); and/or the fourth authentication information satisfies: γᵢ=h(Tagᵢ'∥DIDⱼ); and/or the seventh authentication information satisfies: Eᵢ"=h(βᵢ'∥IDᵢ∥DIDⱼ) and βᵢ'=Fᵢⱼ⊕h(Tagⱼ∥T₃); and/or the third information satisfies: θᵢ=Kᵢ⊕βᵢ, βᵢ=h(Tagᵢ∥T₁), Tagᵢ=W_{i⊕}αᵢ, and Wᵢ=h(rᵢ∥PWᵢ); and/or the fourth information satisfies: Xᵢⱼ=h(Kᵢ'∥T₄)⊕Kⱼ, Kᵢ'=θᵢ⊕βᵢ', and βᵢ'=Fᵢⱼ⊕h(Tagⱼ∥T₃); and/or the second key satisfies: SKᵢⱼ=h(Kᵢ'⊕Kⱼ), Kᵢ'=θᵢ⊕βᵢ', and βᵢ'=Fᵢⱼ⊕h(Tagⱼ∥T₃).

i identifies the internet of things user, j identifies the terminal device, Eᵢ is the first authentication information, Iⱼ is the second authentication information, Fᵢⱼ is the third authentication information, γᵢ is the fourth authentication information, Eᵢ" is the seventh authentication information, θᵢ is the third information, Xᵢⱼ is the fourth information, SKᵢⱼ is the second key, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, Kᵢ is the first key, Kⱼ is the third key, Kᵢ' is the first key restored by the terminal device, T₁ is a moment at which Tagᵢ is obtained, T₃ is a moment at which the internet of things gateway completes authentication on the internet of things user and the terminal device, and T₄ is a moment at which the terminal device obtains Kᵢ'.

Optionally, the first message further includes a first timestamp and/or a second timestamp, the first timestamp indicates Ti, and the second timestamp indicates a moment at which the first message is sent.

Optionally, the second message further includes a third timestamp, and the third timestamp indicates T₃. The processing unit 620 is further configured to: obtain a current timestamp; and determine that a difference between the third timestamp and the current timestamp does not exceed a third preset threshold.

Optionally, the third message further includes a first timestamp, and the first timestamp indicates T₁. The processing unit 620 is further configured to: obtain a current timestamp; and determine that a difference between the first timestamp and the current timestamp does not exceed a fourth preset threshold.

Optionally, the fourth message further includes a fourth timestamp, and the first timestamp indicates T₄.

Optionally, the third message is a login request message.

When the apparatus 600 is configured to implement a function of the first apparatus in the foregoing method embodiments, the transceiver unit 610 is configured to: send a third message to a terminal device, where the third message is used to request to log in to the terminal device, the third message includes first information, and the first information is used to perform authentication on an internet of things user that requests to log in to the terminal device; and receive a fourth message from the terminal device, where the fourth message includes fourth authentication information, the fourth authentication information is used by the internet of things user to perform authentication on the terminal device, and the fourth authentication information is determined by an internet of things gateway; and the processing unit 620 is configured to perform authentication on the terminal device based on the fourth message.

Optionally, the first information includes a first identity of the internet of things user and first authentication information, the first authentication information indicates a first authentication tag on which first encryption processing is performed, and the first authentication tag is an authentication tag of the internet of things user.

Optionally, the fourth authentication information indicates a fourth authentication tag on which fourth encryption processing is performed. The processing unit 620 is specifically configured to: perform the fourth encryption processing on the first authentication tag to obtain eighth authentication information; and when the eighth authentication information is the same as the fourth authentication information, determine that authentication on the terminal device succeeds.

Optionally, the third message further includes third information, the third information indicates a first key on which fifth encryption processing is performed, and the first key is used to determine a second key used when the internet of things user communicates with the terminal device. The fourth message further includes fourth information, the fourth information indicates a third key on which sixth encryption processing is performed, and the third key is generated by the terminal device and is used to determine the second key. The processing unit 620 is further configured to determine the second key based on the fourth information and the first key.

Optionally, at least one of the first encryption processing, the fourth encryption processing, the fifth encryption processing, and the sixth encryption processing is based on a hash algorithm and/or an exclusive OR algorithm.

Optionally, the first authentication information satisfies: Eᵢ=h(βᵢ∥IDᵢ∥DIDⱼ), βᵢ=h(Tagᵢ∥T₁), Tagi=Wi ⊕ αᵢ, and Wᵢ=h(rᵢ∥PWᵢ); and/or the fourth authentication information satisfies: γᵢ=h(Tagᵢ'∥DIDⱼ); and/or the eighth authentication information satisfies: γᵢ'=h(Tagᵢ∥DIDⱼ); and/or the third information satisfies: θᵢ=Kᵢ⊕βᵢ, βᵢ=h(Tagᵢ∥T₁), Tagᵢ=W_{i⊕}αᵢ, and Wᵢ=h(rᵢ∥PWᵢ); and/or the fourth information satisfies: Xᵢⱼ=h(Kᵢ'∥T₄)⊕Kⱼ, Kᵢ'=θᵢ⊕βᵢ', and βᵢ'=Fᵢⱼ⊕h(Tagⱼ∥T₃); and/or the second key satisfies: SKᵢⱼ=h(Kᵢ⊕Kⱼ') and Kⱼ'=h(Kᵢ∥T₄)⊕Xᵢⱼ.

i identifies the internet of things user, j identifies the terminal device, Eᵢ is the first authentication information, γᵢ is the fourth authentication information, γᵢ' is the eighth authentication information, θᵢ is the third information, Xᵢⱼ is the fourth information, SKᵢⱼ is the second key, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Kᵢ is the first key, Kⱼ' is the third key restored by the first apparatus, Kᵢ' is the first key restored by the terminal device, T₁ is a moment at which Tagᵢ is obtained, and T₄ is a moment at which the terminal device obtains Kᵢ'.

Optionally, the fourth message further includes a fourth timestamp, and the first timestamp indicates T₄. The processing unit 620 is further configured to: obtain a current timestamp; and determine, by the first apparatus, that a difference between the fourth timestamp and the current timestamp does not exceed a fifth preset threshold.

Optionally, the third message further includes a first timestamp, and the first timestamp indicates T₁.

Optionally, the third message is a login request message.

When the apparatus 600 is configured to implement a function of the second apparatus in the foregoing method embodiments, the transceiver unit 610 is configured to: send a first registration request message to an internet of things gateway, where the first registration request message is used to request to register an internet of things user corresponding to the second apparatus with the internet of things gateway, the first registration request message includes a first identity of the internet of things user and registration information, and the registration information includes a password that is of the internet of things user and that is encrypted by the second apparatus; and receive a smartcard from the internet of things gateway, where the smartcard includes a first authentication tag encrypted by the internet of things gateway, and the first authentication tag is an authentication tag of the internet of things user.

Optionally, the password that is of the internet of things user and that is encrypted by the second apparatus satisfies: Wᵢ=h(rᵢ∥PWᵢ); and/or the first authentication tag satisfies: Tagᵢ=h(IDᵢ∥K_{GTW}), and the first authentication tag encrypted by the internet of things gateway satisfies: αᵢ=Wᵢ⊕Tagᵢ. i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, II represents concatenation or splicing, and rᵢ is a random number and is carried in the first registration request message and the smartcard.

Optionally, the first registration request message further includes a fifth timestamp, and the fifth timestamp indicates a moment at which the first registration request message is sent.

As shown in FIG. 7, an apparatus 700 includes a processor 710 and an interface circuit 720. The processor 710 and the interface circuit 720 are coupled to each other. It may be understood that the interface circuit 720 may be a transceiver or an input/output interface. Optionally, the apparatus 700 may further include a memory 730, configured to store instructions executed by the processor 710, input data required by the processor 710 to run the instructions, or data generated after the processor 710 runs the instructions. When the apparatus 700 is configured to implement the method described above, the processor 710 is configured to implement a function of the processing unit 620, and the interface circuit 720 is configured to implement a function of the transceiver unit 610.

When the apparatus 700 is a chip used in an internet of things gateway, the chip implements a function of the internet of things gateway in the foregoing method embodiments. The chip receives information from another module (for example, a radio frequency module or an antenna) in the internet of things gateway, where the information is sent by another apparatus to the internet of things gateway; or the chip sends information to another module (for example, a radio frequency module or an antenna) in the internet of things gateway, where the information is sent by the internet of things gateway to another apparatus.

When the apparatus 700 is a chip used in a terminal device, the chip implements a function of the terminal device in the foregoing method embodiments. The chip receives information from another module (for example, a radio frequency module or an antenna) in the terminal device, where the information is sent by another apparatus to the terminal device; or the chip sends information to another module (for example, a radio frequency module or an antenna) in the terminal device, where the information is sent by the terminal device to another apparatus.

When the apparatus 700 is a chip used in a first apparatus, the chip implements a function of the first apparatus in the foregoing method embodiments. The chip receives information from another module (for example, a radio frequency module or an antenna) in the first apparatus, where the information is sent by another apparatus to the first apparatus; or the chip sends information to another module (for example, a radio frequency module or an antenna) in the first apparatus, where the information is sent by the first apparatus to another apparatus.

When the apparatus 700 is a chip used in a second apparatus, the chip implements a function of the second apparatus in the foregoing method embodiments. The chip receives information from another module (for example, a radio frequency module or an antenna) in the second apparatus, where the information is sent by another apparatus to the second apparatus; or the chip sends information to another module (for example, a radio frequency module or an antenna) in the second apparatus, where the information is sent by the second apparatus to another apparatus.

This application further provides a communication apparatus, including a processor. The processor is coupled to a memory. The memory is configured to store a computer program or instructions and/or data. The processor is configured to: execute the computer program or the instructions stored in the memory, or read data stored in the memory, to perform the method in the foregoing method embodiments. Optionally, there are one or more processors. Optionally, the communication apparatus includes the memory. Optionally, there are one or more memories. Optionally, the memory and the processor are integrated together, or are disposed separately.

This application further provides a computer-readable storage medium. The computer-readable storage medium stores computer instructions used to implement the method performed by the first apparatus, the terminal device, the internet of things gateway, or the second apparatus in the foregoing method embodiments.

This application further provides a computer program product, including instructions. When the instructions are executed by a computer, the method performed by the first apparatus, the terminal device, the internet of things gateway, or the second apparatus in the foregoing method embodiments is implemented.

This application further provides a communication system. The communication system includes the first apparatus, the terminal device, the internet of things gateway, and the second apparatus in the foregoing embodiments.

For explanations and beneficial effects of related content of any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, any conventional processor, or the like.

The method steps in embodiments of this application may be implemented by using hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the first apparatus, the terminal device, the internet of things gateway, or the second apparatus. Certainly, the processor and the storage medium may alternatively exist in the first apparatus, the terminal device, the internet of things gateway, or the second apparatus as discrete components.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer programs and instructions. When the computer programs or instructions are loaded and executed on a computer, the procedures or functions in embodiments of this application are completely or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

Unless otherwise stated, meanings of all technical and scientific terms used in embodiments of this application are the same as those usually understood by a person skilled in the technical field of this application. The terms used in this application are merely intended to describe objectives of the specific embodiments, and are not intended to limit the scope of this application. It should be understood that the foregoing description is an example for description, and the foregoing examples are merely intended to help a person skilled in the art understand embodiments of this application, but are not intended to limit embodiments of this application to specific numbers or specific scenarios of the examples. It is clear that a person skilled in the art can make various equivalent modifications or changes based on the examples provided above, and such modifications and changes also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An authentication method, wherein the method comprises:
receiving, by an internet of things gateway, a first message from a terminal device, wherein the first message comprises first information and second information, the first information is used to perform authentication on an internet of things user that requests to log in to the terminal device, and the second information is used to perform authentication on the terminal device;
performing, by the internet of things gateway, authentication on the internet of things user based on the first information;
performing, by the internet of things gateway, authentication on the terminal device based on the second information; and
sending, by the internet of things gateway, a second message to the terminal device when authentication on the internet of things user and the terminal device succeeds, wherein the second message comprises third authentication information and fourth authentication information, the third authentication information is used by the terminal device to perform authentication on the internet of things user, and the fourth authentication information is used by the internet of things user to perform authentication on the terminal device.

2. The method according to claim 1, wherein
the first information comprises a first identity of the internet of things user and first authentication information, the first authentication information indicates a first authentication tag on which first encryption processing is performed, and the first authentication tag is an authentication tag of the internet of things user; and the performing, by the internet of things gateway, authentication on the internet of things user based on the first information comprises: obtaining, by the internet of things gateway based on the first identity, a third authentication tag corresponding to the first identity, and performing the first encryption processing on the third authentication tag to obtain fifth authentication information; and when the fifth authentication information is the same as the first authentication information, determining, by the internet of things gateway, that authentication on the internet of things user succeeds; and/or
the second information comprises a second identity of the terminal device and second authentication information, the second authentication information indicates a second authentication tag on which second encryption processing is performed, and the second authentication tag is an authentication tag of the terminal device; and the performing, by the internet of things gateway, authentication on the terminal device based on the second information comprises: obtaining, by the internet of things gateway based on the second identity, a fourth authentication tag corresponding to the second identity, and performing the second encryption processing on the fourth authentication tag to obtain sixth authentication information; and when the sixth authentication information is the same as the second authentication information, determining, by the internet of things gateway, that authentication on the terminal device succeeds.

3. The method according to claim 1 or 2, wherein
the third authentication information indicates the third authentication tag on which third encryption processing is performed; and/or
the fourth authentication information indicates the fourth authentication tag on which fourth encryption processing is performed.

4. The method according to claim 3, wherein at least one of the first encryption processing, the second encryption processing, the third encryption processing, and the fourth encryption processing is based on a hash algorithm and/or an exclusive OR algorithm.

5. The method according to claim 4, wherein
the first authentication information satisfies: Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or
the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or
the third authentication information satisfies: Fᵢⱼ=βᵢ'⊕h(Tagⱼ'∥T₃) and βᵢ'=h(Tagᵢ'∥T₁); and/or
the fourth authentication information satisfies: γᵢ=h(Tagᵢ'∥DIDⱼ); and/or
the fifth authentication information satisfies: Eᵢ'=h(βᵢ'∥IDᵢ∥DIDⱼ) and βᵢ'=h(Tagᵢ'∥T₁); and/or
the sixth authentication information satisfies: Iⱼ'=h(Tagⱼ'∥Eᵢ'), Eᵢ'=h(βᵢ'∥IDᵢ∥DIDⱼ), and βᵢ'=h(Tagᵢ'∥T₁), wherein
i identifies the internet of things user, j identifies the terminal device, Eᵢ is the first authentication information, Iⱼ is the second authentication information, Fᵢⱼ is the third authentication information, γᵢ is the fourth authentication information, Eᵢ' is the fifth authentication information, Iⱼ' is the sixth authentication information, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, T₁ is a moment at which Tagᵢ is obtained, and T₃ is a moment at which the internet of things gateway completes authentication on the internet of things user and the terminal device.

6. The method according to any one of claims 1 to 5, wherein
the first message further comprises a first timestamp and/or a second timestamp, the first timestamp indicates T₁, and the second timestamp indicates a moment at which the first message is sent; and the method further comprises: obtaining, by the internet of things gateway, a current timestamp; and determining, by the terminal device, that a difference between the first timestamp and the current timestamp does not exceed a first preset threshold, and/or determining, by the internet of things gateway, that a difference between the second timestamp and the current timestamp does not exceed a second preset threshold; and/or
the second message further comprises a third timestamp, and the third timestamp indicates T₃.

7. The method according to any one of claims 1 to 6, wherein the method further comprises:
receiving, by the internet of things gateway, a first registration request message sent by a second apparatus, wherein the first registration request message is used to request to register the internet of things user with the internet of things gateway, the first registration request message comprises the first identity of the internet of things user and registration information, and the registration information comprises the password that is of the internet of things user and that is encrypted by the second apparatus;
determining, by the internet of things gateway, the first authentication tag based on the first registration request message, and generating a smartcard based on the first authentication tag, wherein the smartcard comprises the first authentication tag encrypted by the internet of things gateway; and
sending, by the internet of things gateway, the smartcard to the second apparatus.

8. The method according to claim 7, wherein
the password that is of the internet of things user and that is encrypted by the second apparatus satisfies: Wᵢ=h(rᵢ∥PWᵢ); and/or
the first authentication tag satisfies: Tagᵢ=h(IDᵢ∥K_{GTW}), and the first authentication tag encrypted by the internet of things gateway satisfies: αᵢ=Wᵢ⊕Tagᵢ, wherein
i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, ∥ represents concatenation or splicing, and rᵢ is a random number and is carried in the first registration request message and the smartcard.

9. The method according to claim 7 or 8, wherein the first registration request message further comprises a fifth timestamp, the fifth timestamp indicates a moment at which the first registration request message is sent, and the method further comprises:
obtaining, by the internet of things gateway, a current timestamp; and
determining, by the internet of things gateway, that a difference between the fifth timestamp and the current timestamp does not exceed a sixth preset threshold.

10. The method according to any one of claims 2 to 9, wherein the method further comprises:
verifying, by the internet of things gateway, the first identity.

11. An authentication method, wherein the method comprises:
receiving, by a terminal device, a third message from a first apparatus, wherein the third message is used to request to log in to the terminal device, the third message comprises first information, and the first information is used to perform authentication on an internet of things user that requests to log in to the terminal device;
sending, by the terminal device, a first message to an internet of things gateway based on the third message, wherein the first message comprises the first information and second information, and the second information is used to perform authentication on the terminal device;
receiving, by the terminal device, a second message from the internet of things gateway, wherein the second message comprises third authentication information and fourth authentication information, the third authentication information is used by the terminal device to perform authentication on the internet of things user, and the fourth authentication information is used by the internet of things user to perform authentication on the terminal device;
performing, by the terminal device, authentication on the internet of things user based on the third authentication information; and
sending, by the terminal device, a fourth message to the first apparatus when authentication on the internet of things user succeeds, wherein the fourth message comprises the fourth authentication information.

12. The method according to claim 11, wherein
the first information comprises a first identity of the internet of things user and first authentication information, the first authentication information indicates a first authentication tag on which first encryption processing is performed, and the first authentication tag is an authentication tag of the internet of things user; and/or
the second information comprises a second identity of the terminal device and second authentication information, the second authentication information indicates a second authentication tag on which second encryption processing is performed, and the second authentication tag is an authentication tag of the terminal device; and/or
the third authentication information indicates a third authentication tag on which third encryption processing is performed, and the performing, by the terminal device, authentication on the internet of things user based on the third authentication information comprises: determining, by the terminal device, seventh authentication information based on the third authentication information, wherein the seventh authentication information indicates the third authentication tag on which first encryption processing is performed; and when the seventh authentication information is the same as the first authentication information, determining, by the terminal device, that authentication on the internet of things user succeeds; and/or
the fourth authentication information indicates a fourth authentication tag on which fourth encryption processing is performed.

13. The method according to claim 11 or 12, wherein the third message further comprises third information, the third information indicates a first key on which fifth encryption processing is performed, and the first key is used to determine a second key used when the internet of things user communicates with the terminal device; the fourth message further comprises fourth information, the fourth information indicates a third key on which sixth encryption processing is performed, and the third key is generated by the terminal device and is used to determine the second key; and the method further comprises:
determining, by the terminal device, the second key based on the third information and the third key.

14. The method according to claim 13, wherein at least one of the first encryption processing, the second encryption processing, the third encryption processing, the fourth encryption processing, the fifth encryption processing, and the sixth encryption processing is based on a hash algorithm and/or an exclusive OR algorithm.

15. The method according to claim 14, wherein
the first authentication information satisfies: Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or
the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or
the third authentication information satisfies: Fᵢⱼ=βᵢ'⊕h(Tagⱼ'∥T₃) and βᵢ'=h(Tagᵢ'∥T₁); and/or
the fourth authentication information satisfies: γᵢ=h(Tagᵢ'∥DIDⱼ); and/or
the seventh authentication information satisfies: Eᵢ"=h(βᵢ'∥IDᵢ∥DIDⱼ) and βᵢ'=Fᵢⱼ⊕h(Tagⱼ∥T₃); and/or
the third information satisfies: θᵢ=Kᵢ⊕βᵢ, βᵢ=h(Tagᵢ∥T₁), Tagᵢ=W_{i⊕}αᵢ, and Wᵢ=h(rᵢ∥PWᵢ); and/or
the fourth information satisfies: Xᵢⱼ=h(Kᵢ'∥T₄) ⊕Kⱼ, Kᵢ'=θᵢ ⊕ βᵢ', and βᵢ'=Fᵢⱼ⊕ h(Tagⱼ∥T₃); and/or
the second key satisfies: SKiⱼ=h(Kᵢ'⊕Kⱼ), Kᵢ'=θᵢ⊕βᵢ', and βᵢ'=Fᵢⱼ⊕h(Tagⱼ∥T₃), wherein
i identifies the internet of things user, j identifies the terminal device, Eᵢ is the first authentication information, Iⱼ is the second authentication information, Fᵢⱼ is the third authentication information, γᵢ is the fourth authentication information, Eᵢ" is the seventh authentication information, θᵢ is the third information, Xᵢⱼ is the fourth information, SKᵢⱼ is the second key, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, Kᵢ is the first key, Kⱼ is the third key, Kᵢ' is the first key restored by the terminal device, T₁ is a moment at which Tagᵢ is obtained, T₃ is a moment at which the internet of things gateway completes authentication on the internet of things user and the terminal device, and T₄ is a moment at which the terminal device obtains Kᵢ'.

16. The method according to any one of claims 11 to 15, wherein
the first message further comprises a first timestamp and/or a second timestamp, the first timestamp indicates T₁, and the second timestamp indicates a moment at which the first message is sent; and/or
the second message further comprises a third timestamp, and the third timestamp indicates T₃; and the method further comprises: obtaining, by the terminal device, a current timestamp; and determining, by the terminal device, that a difference between the third timestamp and the current timestamp does not exceed a third preset threshold; and/or
the third message further comprises a first timestamp, and the first timestamp indicates T₁; and the method further comprises: obtaining, by the terminal device, a current timestamp; and determining, by the terminal device, that a difference between the first timestamp and the current timestamp does not exceed a fourth preset threshold; and/or
the fourth message further comprises a fourth timestamp, and the first timestamp indicates T₄.

17. The method according to any one of claims 11 to 16, wherein the third message is a login request message.

18. An authentication method, wherein the method comprises:
sending, by a first apparatus, a third message to a terminal device, wherein the third message is used to request to log in to the terminal device, the third message comprises first information, and the first information is used to perform authentication on an internet of things user that requests to log in to the terminal device;
receiving, by the first apparatus, a fourth message from the terminal device, wherein the fourth message comprises fourth authentication information, the fourth authentication information is used by the internet of things user to perform authentication on the terminal device, and the fourth authentication information is determined by an internet of things gateway; and
performing, by the first apparatus, authentication on the terminal device based on the fourth message.

19. The method according to claim 18, wherein
the first information comprises a first identity of the internet of things user and first authentication information, the first authentication information indicates a first authentication tag on which first encryption processing is performed, and the first authentication tag is an authentication tag of the internet of things user; and/or
the fourth authentication information indicates a fourth authentication tag on which fourth encryption processing is performed; and the performing, by the first apparatus, authentication on the terminal device based on the fourth message comprises: performing, by the first apparatus, the fourth encryption processing on the first authentication tag to obtain eighth authentication information; and when the eighth authentication information is the same as the fourth authentication information, determining, by the first apparatus, that authentication on the terminal device succeeds.

20. The method according to claim 18 or 19, wherein the third message further comprises third information, the third information indicates a first key on which fifth encryption processing is performed, and the first key is used to determine a second key used when the internet of things user communicates with the terminal device; the fourth message further comprises fourth information, the fourth information indicates a third key on which sixth encryption processing is performed, and the third key is generated by the terminal device and is used to determine the second key; and the method further comprises:
determining, by the first apparatus, the second key based on the fourth information and the first key.

21. The method according to claim 20, wherein at least one of the first encryption processing, the fourth encryption processing, the fifth encryption processing, and the sixth encryption processing is based on a hash algorithm and/or an exclusive OR algorithm.

22. The method according to claim 21, wherein
the first authentication information satisfies: Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or
the fourth authentication information satisfies: γᵢ=h(Tagᵢ'∥DIDⱼ); and/or
the eighth authentication information satisfies: γᵢ'=h(Tagᵢ∥DIDⱼ); and/or
the third information satisfies: θᵢ=Kᵢ⊕βᵢ, βᵢ=h(Tagᵢ∥T₁), Tagᵢ=W_{i⊕}αᵢ, and Wᵢ=h(rᵢ∥PWᵢ); and/or
the fourth information satisfies: Xᵢⱼ=h(Kᵢ'∥T₄)⊕Kⱼ, Kᵢ'=θᵢ⊕βᵢ', and βᵢ'=Fᵢⱼ⊕h(Tagⱼ∥T₃); and/or
the second key satisfies: SKᵢⱼ=h(K_{i⊕}Kⱼ') and Kⱼ'=h(Kᵢ∥T₄)⊕Xᵢⱼ, wherein
i identifies the internet of things user, j identifies the terminal device, Eᵢ is the first authentication information, γᵢ is the fourth authentication information, γᵢ' is the eighth authentication information, θᵢ is the third information, Xᵢⱼ is the fourth information, SKᵢⱼ is the second key, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Kᵢ is the first key, Kⱼ' is the third key restored by the first apparatus, Kᵢ' is the first key restored by the terminal device, T₁ is a moment at which Tagᵢ is obtained, and T₄ is a moment at which the terminal device obtains Kᵢ'.

23. The method according to any one of claims 18 to 22, wherein
the fourth message further comprises a fourth timestamp, and the first timestamp indicates T₄; and the method further comprises:
obtaining, by the first apparatus, a current timestamp; and determining, by the first apparatus, that a difference between the fourth timestamp and the current timestamp does not exceed a fifth preset threshold; and/or
the third message further comprises a first timestamp, and the first timestamp indicates Ti.

24. The method according to any one of claims 18 to 23, wherein the third message is a login request message.

25. An authentication method, wherein the method comprises:
sending, by a second apparatus, a first registration request message to an internet of things gateway, wherein the first registration request message is used to request to register an internet of things user corresponding to the second apparatus with the internet of things gateway, the first registration request message comprises a first identity of the internet of things user and registration information, and the registration information comprises a password that is of the internet of things user and that is encrypted by the second apparatus; and
receiving, by the second apparatus, a smartcard from the internet of things gateway, wherein the smartcard comprises a first authentication tag encrypted by the internet of things gateway, and the first authentication tag is an authentication tag of the internet of things user.

26. The method according to claim 25, wherein
the password that is of the internet of things user and that is encrypted by the second apparatus satisfies: Wᵢ=h(rᵢ∥PWᵢ); and/or
the first authentication tag satisfies: Tagᵢ=h(IDᵢ∥K_{GTW}), and the first authentication tag encrypted by the internet of things gateway satisfies: αᵢ=Wᵢ⊕Tagᵢ, wherein
i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, ∥ represents concatenation or splicing, and rᵢ is a random number and is carried in the first registration request message and the smartcard.

27. The method according to claim 25 or 26, wherein the first registration request message further comprises a fifth timestamp, and the fifth timestamp indicates a moment at which the first registration request message is sent.

28. An internet of things gateway, wherein the internet of things gateway comprises:
a transceiver unit, configured to receive a first message from a terminal device, wherein the first message comprises first information and second information, the first information is used to perform authentication on an internet of things user that requests to log in to the terminal device, and the second information is used to perform authentication on the terminal device; and
a processing unit, configured to: perform authentication on the internet of things user based on the first information, and perform authentication on the terminal device based on the second information, wherein
the transceiver unit is further configured to send a second message to the terminal device when authentication on the internet of things user and the terminal device succeeds, wherein the second message comprises third authentication information and fourth authentication information, the third authentication information is used by the terminal device to perform authentication on the internet of things user, and the fourth authentication information is used by the internet of things user to perform authentication on the terminal device.

29. The internet of things gateway according to claim 28, wherein
the first information comprises a first identity of the internet of things user and first authentication information, the first authentication information indicates a first authentication tag on which first encryption processing is performed, and the first authentication tag is an authentication tag of the internet of things user; and the processing unit is specifically configured to: obtain, based on the first identity, a third authentication tag corresponding to the first identity, and perform the first encryption processing on the third authentication tag to obtain fifth authentication information; and when the fifth authentication information is the same as the first authentication information, determine that authentication on the internet of things user succeeds; and/or
the second information comprises a second identity of the terminal device and second authentication information, the second authentication information indicates a second authentication tag on which second encryption processing is performed, and the second authentication tag is an authentication tag of the terminal device; and the processing unit is specifically configured to: obtain, based on the second identity, a fourth authentication tag corresponding to the second identity, and perform the second encryption processing on the fourth authentication tag to obtain sixth authentication information; and when the sixth authentication information is the same as the second authentication information, determine that authentication on the terminal device succeeds.

30. The internet of things gateway according to claim 28 or 29, wherein
the third authentication information indicates the third authentication tag on which third encryption processing is performed; and/or
the fourth authentication information indicates a fourth authentication tag on which fourth encryption processing is performed.

31. The internet of things gateway according to claim 30, wherein at least one of the first encryption processing, the second encryption processing, the third encryption processing, and the fourth encryption processing is based on a hash algorithm and/or an exclusive OR algorithm.

32. The internet of things gateway according to claim 31, wherein
the first authentication information satisfies: Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or
the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=W_{i⊕}αᵢ, and Wᵢ=h(rᵢ∥PWᵢ); and/or
the third authentication information satisfies: Fᵢⱼ=βᵢ'⊕h(Tagⱼ'∥T₃) and βᵢ'=h(Tagᵢ'∥T₁); and/or
the fourth authentication information satisfies: γᵢ=h(Tagᵢ'∥DIDⱼ); and/or
the fifth authentication information satisfies: Eᵢ'=h(βᵢ'∥IDᵢ∥DIDⱼ) and βᵢ'=h(Tagᵢ'∥T₁); and/or
the sixth authentication information satisfies: Iⱼ'=h(Tagⱼ'∥Eᵢ'), Eᵢ'=h(βᵢ'∥IDᵢ∥DIDⱼ), and βᵢ'=h(Tagᵢ'∥T₁), wherein
i identifies the internet of things user, j identifies the terminal device, Eᵢ is the first authentication information, Iⱼ is the second authentication information, Fᵢⱼ is the third authentication information, γᵢ is the fourth authentication information, Eᵢ' is the fifth authentication information, Iⱼ' is the sixth authentication information, h() represents a one-way hash function, ⊕ represents exclusive OR, ∥ represents concatenation or splicing, Wi, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, T₁ is a moment at which Tagᵢ is obtained, and T₃ is a moment at which the internet of things gateway completes authentication on the internet of things user and the terminal device.

33. The internet of things gateway according to any one of claims 28 to 32, wherein
the first message further comprises a first timestamp and/or a second timestamp, the first timestamp indicates T₁, and the second timestamp indicates a moment at which the first message is sent; and the processing unit is further configured to: obtain, by the internet of things gateway, a current timestamp; and determine that a difference between the first timestamp and the current timestamp does not exceed a first preset threshold, and/or determine that a difference between the second timestamp and the current timestamp does not exceed a second preset threshold; and/or
the second message further comprises a third timestamp, and the third timestamp indicates T₃.

34. The internet of things gateway according to any one of claims 28 to 33, wherein
the transceiver unit is further configured to receive a first registration request message sent by a second apparatus, wherein the first registration request message is used to request to register the internet of things user with the internet of things gateway, the first registration request message comprises the first identity of the internet of things user and registration information, and the registration information comprises the password that is of the internet of things user and that is encrypted by the second apparatus;
the processing unit is further configured to: determine the first authentication tag based on the first registration request message, and generate a smartcard based on the first authentication tag, wherein the smartcard comprises the first authentication tag encrypted by the internet of things gateway; and
the transceiver unit is further configured to send the smartcard to the second apparatus.

35. The internet of things gateway according to claim 34, wherein
the password that is of the internet of things user and that is encrypted by the second apparatus satisfies: Wᵢ=h(rᵢ∥PWᵢ); and/or
the first authentication tag satisfies: Tagᵢ=h(IDᵢ∥K_{GTW}), and the first authentication tag encrypted by the internet of things gateway satisfies: αᵢ=Wᵢ⊕Tagᵢ, wherein
i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, ∥ represents concatenation or splicing, and rᵢ is a random number and is carried in the first registration request message and the smartcard.

36. The internet of things gateway according to claim 34 or 35, wherein the first registration request message further comprises a fifth timestamp, and the fifth timestamp indicates a moment at which the first registration request message is sent; and the processing unit is further configured to: obtain a current timestamp; and determine that a difference between the fifth timestamp and the current timestamp does not exceed a sixth preset threshold.

37. The internet of things gateway according to any one of claims 29 to 36, wherein
the processing unit is further configured to verify the first identity.

38. A terminal device, wherein the terminal device comprises:
a transceiver unit, configured to: receive a third message from a first apparatus, wherein the third message is used to request to log in to the terminal device, the third message comprises first information, and the first information is used to perform authentication on an internet of things user that requests to log in to the terminal device; send a first message to an internet of things gateway based on the third message, wherein the first message comprises the first information and second information, and the second information is used to perform authentication on the terminal device; and receive a second message from the internet of things gateway, wherein the second message comprises third authentication information and fourth authentication information, the third authentication information is used by the terminal device to perform authentication on the internet of things user, and the fourth authentication information is used by the internet of things user to perform authentication on the terminal device; and
a processing unit, configured to perform authentication on the internet of things user based on the third authentication information, wherein
the transceiver unit is further configured to send a fourth message to the first apparatus when authentication on the internet of things user succeeds, wherein the fourth message comprises the fourth authentication information.

39. The terminal device according to claim 38, wherein
the first information comprises a first identity of the internet of things user and first authentication information, the first authentication information indicates a first authentication tag on which first encryption processing is performed, and the first authentication tag is an authentication tag of the internet of things user; and/or
the second information comprises a second identity of the terminal device and second authentication information, the second authentication information indicates a second authentication tag on which second encryption processing is performed, and the second authentication tag is an authentication tag of the terminal device; and/or
the third authentication information indicates a third authentication tag on which third encryption processing is performed; and the processing unit is specifically configured to: determine seventh authentication information based on the third authentication information, wherein the seventh authentication information indicates the third authentication tag on which first encryption processing is performed; and when the seventh authentication information is the same as the first authentication information, determine that authentication on the internet of things user succeeds; and/or
the fourth authentication information indicates a fourth authentication tag on which fourth encryption processing is performed.

40. The terminal device according to claim 38 or 39, wherein the third message further comprises third information, the third information indicates a first key on which fifth encryption processing is performed, and the first key is used to determine a second key used when the internet of things user communicates with the terminal device; the fourth message further comprises fourth information, the fourth information indicates a third key on which sixth encryption processing is performed, and the third key is generated by the terminal device and is used to determine the second key; and the processing unit is further configured to determine the second key based on the third information and the third key.

41. The terminal device according to claim 40, wherein at least one of the first encryption processing, the second encryption processing, the third encryption processing, the fourth encryption processing, the fifth encryption processing, and the sixth encryption processing is based on a hash algorithm and/or an exclusive OR algorithm.

42. The terminal device according to claim 41, wherein
the first authentication information satisfies: Eᵢ=h(βᵢ∥IDᵢ∥DIDⱼ), βᵢ=h(Tagᵢ∥T₁), Tagᵢ=Wᵢ⊕αᵢ, and Wᵢ=h(rᵢ∥PWᵢ); and/or
the second authentication information satisfies: Iⱼ=h(Tagⱼ∥Eᵢ), Eᵢ=h(βᵢ∥IDᵢ∥DIDⱼ), βᵢ=h(Tagᵢ∥T₁), Tagᵢ=Wᵢ⊕αᵢ, and Wᵢ=h(rᵢ∥PWᵢ); and/or
the third authentication information satisfies: Fᵢⱼ=βᵢ'⊕h(Tagⱼ'∥T₃) and βᵢ'=h(Tagᵢ'∥T₁); and/or
the fourth authentication information satisfies: γᵢ=h(Tagᵢ'∥DIDⱼ); and/or
the seventh authentication information satisfies: Eᵢ"=h(βᵢ'∥IDᵢ∥DIDⱼ) and βᵢ'=Fᵢⱼ⊕h(Tagⱼ∥T₃); and/or
the third information satisfies: θᵢ=Kᵢ⊕βᵢ, βᵢ=h(Tagᵢ∥T₁), Tagᵢ=Wᵢ⊕αᵢ, and Wᵢ=h(rᵢ∥PWᵢ); and/or
the fourth information satisfies: Xᵢⱼ=h(Kᵢ'∥T₄)⊕Kⱼ, Kᵢ'=θᵢ⊕βᵢ', and βᵢ'=Fᵢⱼ⊕h(Tagⱼ∥T₃); and/or
the second key satisfies: SKᵢⱼ=h(Kᵢ'⊕Kⱼ), Kᵢ'=θᵢ⊕βᵢ', and βᵢ'=Fᵢⱼ⊕h(Tagⱼ∥T₃), wherein
i identifies the internet of things user, j identifies the terminal device, Eᵢ is the first authentication information, Iⱼ is the second authentication information, Fᵢⱼ is the third authentication information, γᵢ is the fourth authentication information, Eᵢ" is the seventh authentication information, θᵢ is the third information, Xᵢⱼ is the fourth information, SKᵢⱼ is the second key, h() represents a one-way hash function, ⊕ represents exclusive OR, ∥ represents concatenation or splicing, Wᵢ, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Tagⱼ is the second authentication tag, Tagⱼ' is the fourth authentication tag, Kᵢ is the first key, Kⱼ is the third key, Kᵢ' is the first key restored by the terminal device, T₁ is a moment at which Tagᵢ is obtained, T₃ is a moment at which the internet of things gateway completes authentication on the internet of things user and the terminal device, and T₄ is a moment at which the terminal device obtains Kᵢ'.

43. The terminal device according to any one of claims 38 to 42, wherein
the first message further comprises a first timestamp and/or a second timestamp, the first timestamp indicates T₁, and the second timestamp indicates a moment at which the first message is sent; and/or
the second message further comprises a third timestamp, and the third timestamp indicates T₃; and the processing unit is further configured to: obtain a current timestamp, and determine that a difference between the third timestamp and the current timestamp does not exceed a third preset threshold; and/or
the third message further comprises a first timestamp, and the first timestamp indicates T₁; and the processing unit is further configured to: obtain a current timestamp, and determine that a difference between the first timestamp and the current timestamp does not exceed a fourth preset threshold; and/or
the fourth message further comprises a fourth timestamp, and the first timestamp indicates T₄.

44. The terminal device according to any one of claims 38 to 43, wherein the third message is a login request message.

45. A first apparatus, wherein the first apparatus comprises:
a transceiver unit, configured to: send a third message to a terminal device, wherein the third message is used to request to log in to the terminal device, the third message comprises first information, and the first information is used to perform authentication on an internet of things user that requests to log in to the terminal device; and receive a fourth message from the terminal device, wherein the fourth message comprises fourth authentication information, the fourth authentication information is used by the internet of things user to perform authentication on the terminal device, and the fourth authentication information is determined by an internet of things gateway; and
a processing unit, configured to perform authentication on the terminal device based on the fourth message.

46. The first apparatus according to claim 45, wherein
the first information comprises a first identity of the internet of things user and first authentication information, the first authentication information indicates a first authentication tag on which first encryption processing is performed, and the first authentication tag is an authentication tag of the internet of things user; and/or
the fourth authentication information indicates a fourth authentication tag on which fourth encryption processing is performed; and the processing unit is specifically configured to: perform the fourth encryption processing on the first authentication tag to obtain eighth authentication information; and when the eighth authentication information is the same as the fourth authentication information, determine that authentication on the terminal device succeeds.

47. The first apparatus according to claim 45 or 46, wherein the third message further comprises third information, the third information indicates a first key on which fifth encryption processing is performed, the first key is used to determine a second key used when the internet of things user communicates with the terminal device, the fourth message further comprises fourth information, the fourth information indicates a third key on which sixth encryption processing is performed, and the third key is generated by the terminal device and is used to determine the second key; and the processing unit is further configured to determine the second key based on the fourth information and the first key.

48. The first apparatus according to claim 47, wherein at least one of the first encryption processing, the fourth encryption processing, the fifth encryption processing, and the sixth encryption processing is based on a hash algorithm and/or an exclusive OR algorithm.

49. The first apparatus according to claim 48, wherein
the first authentication information satisfies: Eᵢ=h(βᵢ∥IDᵢ∥DIDⱼ), βᵢ=h(Tagᵢ∥T₁), Tagᵢ=Wᵢ⊕αᵢ, and Wᵢ=h(rᵢ∥PWᵢ); and/or
the fourth authentication information satisfies: γᵢ=h(Tagᵢ'∥DIDⱼ); and/or
the eighth authentication information satisfies: γᵢ'=h(Tagᵢ∥DIDⱼ); and/or
the third information satisfies: θᵢ=Kᵢ⊕βᵢ, βᵢ=h(Tagᵢ∥T₁), Tagᵢ=Wᵢ⊕αᵢ, and Wᵢ=h(rᵢ∥PWᵢ); and/or
the fourth information satisfies: Xᵢⱼ=h(Kᵢ'∥T₄)^{®}Kⱼ, Kᵢ'=θᵢ⊕βᵢ', and βᵢ'=Fᵢⱼ⊕h(Tagⱼ∥T₃); and/or
the second key satisfies: SKᵢⱼ=h(Kᵢ⊕Kⱼ') and Kⱼ'=h(Kᵢ∥T₄)⊕Xᵢⱼ, wherein
i identifies the internet of things user, j identifies the terminal device, Eᵢ is the first authentication information, γᵢ is the fourth authentication information, γᵢ' is the eighth authentication information, θᵢ is the third information, Xᵢⱼ is the fourth information, SKᵢⱼ is the second key, h() represents a one-way hash function, ⊕ represents exclusive OR, ∥ represents concatenation or splicing, Wᵢ, βᵢ, and βᵢ' are intermediate variables, IDᵢ is the first identity, DIDⱼ is the second identity, Tag; is the first authentication tag, αᵢ is the first authentication tag encrypted by the internet of things gateway, rᵢ is a random number, PWᵢ is a password of the internet of things user, Tagᵢ' is the third authentication tag, Kᵢ is the first key, Kⱼ' is the third key restored by the first apparatus, Kᵢ' is the first key restored by the terminal device, T₁ is a moment at which Tagᵢ is obtained, and T₄ is a moment at which the terminal device obtains Kᵢ'.

50. The first apparatus according to any one of claims 45 to 49, wherein
the fourth message further comprises a fourth timestamp, and the first timestamp indicates T₄; and the processing unit is further configured to: obtain a current timestamp, and determine that a difference between the fourth timestamp and the current timestamp does not exceed a fifth preset threshold; and/or
the third message further comprises a first timestamp, and the first timestamp indicates T₁.

51. The first apparatus according to any one of claims 45 to 50, wherein the third message is a login request message.

52. A second apparatus, wherein the second apparatus comprises:
a transceiver unit, configured to send a first registration request message to an internet of things gateway, wherein the first registration request message is used to request to register an internet of things user corresponding to the second apparatus with the internet of things gateway, the first registration request message comprises a first identity of the internet of things user and registration information, and the registration information comprises a password that is of the internet of things user and that is encrypted by the second apparatus, wherein
the transceiver unit is further configured to receive a smartcard from the internet of things gateway, wherein the smartcard comprises a first authentication tag encrypted by the internet of things gateway, and the first authentication tag is an authentication tag of the internet of things user.

53. The second apparatus according to claim 52, wherein
the password that is of the internet of things user and that is encrypted by the second apparatus satisfies: Wᵢ=h(rᵢ∥PWᵢ); and/or
the first authentication tag satisfies: Tagᵢ=h(IDᵢ∥K_{GTW}), and the first authentication tag encrypted by the internet of things gateway satisfies: αᵢ=Wᵢ⊕Tagᵢ, wherein
i identifies the internet of things user, Wᵢ is the password that is of the internet of things user and that is encrypted by the second apparatus, PWᵢ is the password of the internet of things user, αᵢ is the first authentication tag encrypted by the internet of things gateway, Tagᵢ is the first authentication tag, IDᵢ is the first identity of the internet of things user, K_{GTW} is a key of the internet of things gateway, h() represents a one-way hash function, ⊕ represents exclusive OR, ∥ represents concatenation or splicing, and rᵢ is a random number and is carried in the first registration request message and the smartcard.

54. The second apparatus according to claim 52 or 53, wherein the first registration request message further comprises a fifth timestamp, and the fifth timestamp indicates a moment at which the first registration request message is sent.

55. A communication apparatus, comprising a processor, wherein the processor is coupled to a memory, and is configured to execute computer instructions stored in the memory, so that the apparatus performs the method according to any one of claims 1 to 10, the method according to any one of claims 11 to 17, the method according to any one of claims 18 to 24, or the method according to any one of claims 25 to 27.

56. The apparatus according to claim 55, wherein the apparatus further comprises the memory.

57. A processor, comprising an input circuit, an output circuit, and a processing circuit, wherein the processing circuit is configured to: receive a signal through the input circuit, and output a signal through the output circuit, so that the processor performs the method according to any one of claims 1 to 10, the method according to any one of claims 11 to 17, the method according to any one of claims 18 to 24, or the method according to any one of claims 25 to 27.

58. A chip, comprising a processor, wherein the processor is coupled to a memory, and is configured to execute computer instructions stored in the memory, so that the apparatus performs the method according to any one of claims 1 to 10, the method according to any one of claims 11 to 17, the method according to any one of claims 18 to 24, or the method according to any one of claims 25 to 27.

59. The chip according to claim 58, wherein the chip further comprises the memory.

60. A computer-readable storage medium, wherein the computer-readable medium stores a computer program, and when the computer program is executed by one or more processors, an apparatus comprising the processor is enabled to perform the method according to any one of claims 1 to 10, the method according to any one of claims 11 to 17, the method according to any one of claims 18 to 24, or the method according to any one of claims 25 to 27.

61. A computer program product, wherein the computer program product comprises computer program code, and when the computer program code runs on a computer, the method according to any one of claims 1 to 10, the method according to any one of claims 11 to 17, the method according to any one of claims 18 to 24, or the method according to any one of claims 25 to 27 is implemented.

62. A communication system, wherein the system comprises at least one of the following devices:
an internet of things gateway configured to perform the method according to any one of claims 1 to 10;
a terminal device configured to perform the method according to any one of claims 11 to 17;
a first apparatus configured to perform the method according to any one of claims 18 to 24; or
a second apparatus configured to perform the method according to any one of claims 25 to 27.
